(19) Europäisches Patentamt
European Patent Office
Office européen des brevets

(11) EP 4 329 021 A1

(12) EUROPEAN PATENT APPLICATION
published in accordance with Art. 153(4) EPC

(43) Date of publication:
**28.02.2024 Bulletin 2024/09**

(21) Application number: **21950913.0**

(22) Date of filing: **20.07.2021**

(51) International Patent Classification (IPC):
***H01M 8/0221*** *(2016.01)* ***H01M 8/0228*** *(2016.01)*
***H01M 50/403*** *(2021.01)* ***H01M 50/414*** *(2021.01)*
***H01M 50/423*** *(2021.01)* ***H01M 50/449*** *(2021.01)*

(52) Cooperative Patent Classification (CPC):
**H01M 8/0221; H01M 8/0228; H01M 50/403; H01M 50/414; H01M 50/423; H01M 50/449;**
Y02E 60/10; Y02E 60/50

(86) International application number:
**PCT/JP2021/027107**

(87) International publication number:
**WO 2023/002560 (26.01.2023 Gazette 2023/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Shin-Etsu Polymer Co., Ltd.**
**Tokyo 100-0004 (JP)**

(72) Inventors:
- **TESHIMA, Masahiro**
  **Saitama-shi, Saitama 331-0811 (JP)**
- **MASUMURA, Masahiko**
  **Saitama-shi, Saitama 331-0811 (JP)**
- **YOKOKURA, Maho**
  **Saitama-shi, Saitama 331-0811 (JP)**
- **HONDA, Masayuki**
  **Saitama-shi, Saitama 331-0811 (JP)**

(74) Representative: **Arnold & Siedsma**
**Bezuidenhoutseweg 57**
**2594 AC The Hague (NL)**

# (54) SEPARATOR AND METHOD FOR PRODUCING SAME

(57) Provided are a separator having excellent strength and electrical conductivity and a method for producing the same. The present invention is related to a separator 1 for an electricity storage device comprising a plate 2 containing graphite, resin, and aramid fiber different from the resin and to a method for producing the same. The plate 2 comprises, on surfaces 31 thereof, grooves 30, 32 serving as flow paths. The aramid fiber is para-aramid fiber containing a meta-phenylene group.

[Figure 2A]

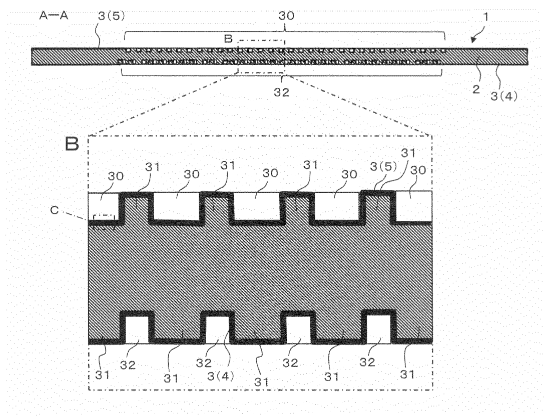


EP 4 329 021 A1

## Description

Cross Reference

The contents of the patents, patent applications, and documents cited in the present application are incorporated herein by reference.

Technical Field

The present invention is related to a separator and a method for producing the same.

Background Art

Fuel cells are cells from which energy is taken out by using a reaction between hydrogen and oxygen. Because what is generated from the reaction is water, fuel cells are known to be earth environment-friendly cells. In particular, for the capability of achieving high power density while being compact and lightweight, solid polymer fuel cells are considered as a favorable candidate for batteries of automobiles, communication devices, electronic devices and the like, while the actual implementation thereof is also partially underway. A fuel cell is a cell stack in which a plurality of cells is stacked together. Wall members called separators are arranged between the cells. Each separator is a partition for separating paths for hydrogen and oxygen positioned adjacent to each other and plays a role in making the hydrogen and the oxygen flow while being in uniform contact with the entire surface of an ion exchange membrane. For this reason, grooves serving as flow paths are formed on the separators.

From a viewpoint of constituent materials, separators can roughly be divided into a metal material group and a carbon material group. The material used for separators in the metal material group may be generally stainless steel, aluminum or an alloy thereof, or titanium or an alloy thereof. The separators in the metal material group have excellent processability and can be very thin, due to strength and ductility specific to metal. However, the separators in the metal material group have higher specific gravity than separators in the carbon material group (explained later) and thus contradict the idea of making fuel cells lightweight. In addition, the separators in the metal material group have disadvantages where corrosion resistance is low, and a passive film may be formed by some of the materials. Because of the possibility of an increase in electrical resistance of the separators, corrosion and passive films of metal materials are not desirable. When separators in the metal material group are coated with precious metal plating or sputtering to improve corrosion resistance, costs may increase. To keep the costs down, a method is known by which ridge parts of flow paths formed on a surface of a separator are formed with a photoresist film (see Patent Literature 1).

In contrast, the separators in the carbon material group have advantages where specific gravity is lower while corrosion resistance is higher, in comparison to the separators in the metal material group. However, the separators in the carbon material group are inferior in processability and mechanical strength. In addition, there is demand for making electrical resistance even lower (i.e., making electrical conductivity even higher). As a method for improving the mechanical strength, a separator is known, for example, in which graphite particles are dispersed in thermoplastic resin (see Patent Literature 2).

Citation List

Patent Literature

Patent Literature 1: Japanese Patent Laid-Open No. 2011-090937
Patent Literature 2: Japanese Patent Laid-Open No. 2006-294407

Summary of Invention

Technical Problem

The method of dispersing graphite particles in thermoplastic resin can realize high strength of separators to some extent. However, even when the separators in the carbon material group are produced in this manner, those separators are difficult to be made thinner and are required to have even higher strength. In addition, there is also a demand for excelling in having higher electrical conductivity. The foregoing may be applicable not only to separators of a fuel cell or fuel cells, but also to separators used in primary batteries such as lithium batteries, secondary batteries

such as redox flow batteries, and other electricity storage devices such as capacitors.

It is an object of the present invention to provide a separator having excellent strength and electrical conductivity and a method for producing the same.

Solution to Problem

(1) A separator according to an embodiment for achieving the abovementioned object is a separator for an electricity storage device comprising a plate containing graphite, resin, and aramid fiber different from the resin, wherein the plate comprises, on a surface thereof, a groove serving as a flow path, and the aramid fiber is para-aramid fiber containing a meta-phenylene group.

(2) A separator according to another embodiment may preferably further comprise: a barrier layer that has a better gas barrier property than that of the plate and is formed on at least a surface on a front side and a surface on a rear side of the plate including the groove and surfaces of the plate other than the groove.

(3) In a separator according to yet another embodiment, the barrier layer may preferably be a film-like covering layer different from the plate.

(4) In a separator according to yet another embodiment, the barrier layer may preferably be a filling layer in which resin or rubber fills spaces between particles or fibers structuring the plate.

(5) In a separator according to yet another embodiment, the barrier layer may preferably comprise the filling layer and a film-like covering layer different from the plate.

(6) In a separator according to yet another embodiment, the barrier layer may preferably contain at least one of polyether ether ketone and polyphenylene sulfide.

(7) In a separator according to yet another embodiment, the resin structuring the plate and resin structuring the barrier layer may preferably be thermoplastic resin of a mutually same type.

(8) In a separator according to yet another embodiment, at least one of the resin structuring the plate and resin structuring the barrier layer may preferably contain polyphenylene sulfide as a principal material thereof.

(9) A method for producing a separator according to an embodiment for achieving the abovementioned object is a method for producing one of the abovementioned separators, comprising:

a shaping material arranging step of arranging, in a mold, a shaping material being one selected from among a mixture obtained by mixing together at least the graphite, the resin, and the aramid fiber, a grooved plate that is the plate comprising, on a surface thereof, a pre-groove part that is shallower than the groove that serves as a flow path, and a precursor plate that is the grooved plate in a state without the pre-groove part; and

a shaping step of performing a shaping process by closing the mold while the shaping material is in a state of being arranged therein.

(10) In a method for producing the separator according to another embodiment, preferably,

the shaping material either may be the mixture obtained by mixing together at least the graphite, the resin, and the aramid fiber or may be the precursor plate,

the mold may comprise, on inside thereof, an uneven surface for transferring the groove, and

in the shaping step, either the mixture or the precursor plate may be shaped and the groove may be formed, by using the mold comprising the uneven surface.

(11) In a method for producing the separator according to yet another embodiment, preferably,

the shaping material may be the grooved plate,

the mold may comprise, on inside thereof, an uneven surface that is insertable into the pre-groove part and is for transferring the groove, and

in the shaping step, the groove may be formed by deepening the pre-groove part on the grooved plate, while using the mold comprising the uneven surface.

(12) A method for producing the separator according to yet another embodiment may preferably further comprise:

a first film arranging step, prior to the shaping material arranging step, of arranging, in the mold, a first film for forming, on at least the surface on the rear side of the plate, a barrier layer having a better gas barrier property than that of the plate; and

a second film arranging step of arranging a second film for forming the barrier layer, over the shaping material arranged in the mold in the shaping material arranging step, wherein
in the shaping material arranging step, the shaping material may be arranged on the first film, and
in the shaping step, the shaping process may be performed by closing the mold while the shaping material is sandwiched between the first film and the second film, to form the barrier layer on both of the surfaces of the plate on the front side and on the rear side.

(13) In a method for producing the separator according to yet another embodiment, the resin in the mixture may preferably be resin powder in a flake form.

Advantageous Effects of Invention

The present invention is able to provide the separator having excellent strength and electrical conductivity and the method for producing the same.

Brief Description of Drawings

[Figure 1] Figure 1 presents a plan view of a separator according to a first embodiment of the present invention.
[Figure 2A] Figure 2A presents a cross-sectional view of the separator in Figure 1 at A-A and an enlarged view of B which is a part thereof.
[Figure 2B] Figure 2B presents enlarged views of variations a, b, and c of C which is a part of B being a part of Figure 2A.
[Figure 3] Figure 3 shows an example of a flow in main steps in a separator producing method according to the first embodiment.
[Figure 4] Figure 4 presents cross-sectional views of statuses at the steps in the producing method in Figure 3.
[Figure 5] Figure 5 presents cross-sectional views of statuses at the steps following Figure 4.
[Figure 6] Figure 6 shows an example of a flow in main steps in a producing method according to a second embodiment.
[Figure 7] Figure 7 presents cross-sectional views of statuses at the steps in the producing method in Figure 6.
[Figure 8] Figure 8 presents cross-sectional views of statuses at the steps following Figure 7.
[Figure 9] Figure 9 presents a cross-sectional view of a status when a grooved plate is used in place of a precursor plate, in a separator producing method according to a modification example.
[Figure 10] Figure 10 presents a cross-sectional view of a separator according to the second embodiment at A-A similar to Figure 2A and an enlarged view of B which is a part thereof.
[Figure 11] Figure 11 shows an example of a flow in main steps in a separator producing method according to the second embodiment.
[Figure 12] Figure 12 shows an example of a flow in main steps in a producing method different from Figure 11.

Reference Signs List

1, 1a separator; 2 plate; 2a mixture (an example of a shaping material); 3 barrier layer; 4 first film; 5 second film; 30, 32, groove; 31 surface; 40, 45 bottom mold (a component part of a mold); 41, 46, 51, 56 recessed part; 42, 52 uneven surface; 50, 55 top mold (a component part of the mold); 60, 65 mold; 70 precursor plate (another example of the shaping material); 70a grooved plate (yet another example of the shaping material); F covering layer; M filling layer.

Description of Embodiments

Embodiments of the present invention will be explained with reference to the drawings. The embodiments described below do not limit the invention set forth in the patent claims. Further, the various elements described in the embodiments and combinations thereof are not all necessarily requisite for the problem-solving means of the present invention.

1. A separator

Figure 1 presents a plan view of a separator according to a first embodiment of the present invention. Figure 2A presents a cross-sectional view of the separator in Figure 1 at A-A and an enlarged view of B which is a part thereof. Figure 2B presents enlarged views of variations a, b, and c of C which is a part of B being a part of Figure 2A.

A separator 1 according to the present embodiment is a plate-like body having a substantially rectangular shape in a planar view. In a fuel cell, for example, the separator 1 according to the present embodiment is the plate-like body that may sandwich, from both sides, a Membrane Electrode Assembly (MEA) in which an electrolyte membrane is interposed between an air electrode and a hydrogen electrode positioned on the two surfaces thereof. In the present embodiment, the separator 1 is interpreted in a broader sense including an anode-side separator provided on the hydrogen electrode (which may be called "anode electrode") side and a cathode-side separator provided on the air-electrode (which may be called "cathode electrode") side. In the present embodiment, the separator 1 is a separator in the carbon material group. Further, the separator 1 is not limited to be used in a fuel cell or fuel cells, but may be used as a plate-like member disposed between cells in a redox flow battery or an electricity storage device of other types such as a capacitor.

The separator 1 comprises through holes 11, 12, 21, and 22 penetrating in the thickness direction thereof. The through holes 11 and 21 are positioned on one end side of the separator 1. The through hole 12 is positioned on the other end side opposite the one end side of the separator 1, while being positioned opposite the through hole 21 in a planar view of the separator 1. The through hole 22 is positioned on the other end side opposite the one end side of the separator 1, while being positioned opposite the through hole 11 in a planar view of the separator 1. On one of the surfaces (a front surface) of the separator 1, grooves 30 serving as flow paths are formed. A surface 31 other than the grooves 30 is formed as a raised plane in contrast to the grooves 30. On the other surface (a rear surface) on the opposite side of the one surface of the separator 1, grooves 32 serving as flow paths are formed. A surface 31 other than the grooves 32 is formed as a raised plane in contrast to the grooves 32.

When the separator 1 is a cathode-side separator, the through hole 11 serves as an oxidization gas supply opening. The through hole 12 serves as an oxidization gas discharge opening. The through hole 21 serves as a hydrogen gas discharge opening. The through hole 22 serves as a hydrogen gas supply opening. The oxidization gas may be air, for example, but may be oxygen. The grooves 30 on the front surface of the separator 1 serve as flow paths in which the oxidization gas flows. The grooves 32 on the rear surface of the separator 1 serve as flow paths in which cooling water flows. In Figure 1, the white arrows indicate flows of the oxidization gas.

When the separator 1 is an anode-side separator, the through hole 11 serves as a hydrogen gas supply opening. The through hole 12 serves as a hydrogen gas discharge opening. The through hole 21 serves as an oxidization gas discharge opening. The through hole 22 serves as an oxidization gas supply opening. The grooves 30 on the front surface of the separator 1 serve as flow paths in which the hydrogen gas flows. The grooves 32 on the rear surface of the separator 1 serve as flow paths in which cooling water flows.

The separator 1 comprises at least a plate 2. In the present embodiment, the separator 1 preferably comprises the plate 2 and, as an option, barrier layers 3 provided on the surfaces on both sides, in the thickness direction, of the plate 2.

(The plate)

The plate 2 is a plate that contains graphite, resin, and aramid fiber different from the resin and comprises, on the surfaces thereof, the grooves 30 and 32 serving as the flow paths. The plate 2 is a shaped body containing the graphite, the resin, and the aramid fiber different from the resin and has a fine structure in which the graphite is dispersed in the resin that was melted and subsequently solidified. Before being shaped, the graphite structuring the plate 2 is preferably in a particulate form or a fiber form. Before being shaped, the resin structuring the plate 2 is preferably in a particulate form or a fiber form. In these situations, examples of the particulate form include a flake form (which may be called flakes). Examples of the fiber form include a whisker-like form. A more preferable combination of forms of the graphite, the resin, and the aramid fiber before being shaped is the graphite in a particulate or fiber form combined with the resin in a flake form and the aramid fiber in a fiber form. In addition to the graphite, the resin, and the aramid fiber, the plate 2 may contain one or more other types of fibers different from the resin and the aramid fiber. As long as the fiber is of a type different from the resin and the aramid fiber, the fiber may be any type of fiber such as resin fiber, carbon fiber, ceramic fiber, and/or the like. The plate 2 comprises grooves corresponding to the grooves 30 and 32 of the separator 1. In a planar view, the area of the plate 2 is preferably in the range of 10 $cm^2$ to 1000 $cm^2$ inclusive and more preferably in the range of 100 $cm^2$ to 750 $cm^2$ inclusive. The thickness of the plate 2 is preferably in the range of 0.1 mm to 20 mm inclusive and more preferably in the range of 0.2 mm to 10 mm inclusive.

The resin structuring the plate 2 is not particularly limited, but is preferably thermoplastic resin. Resin having excellent heat resistance is more preferable for the resin to structure the plate 2. More specifically, examples include: polyphenylene sulfide (PPS), polyether ether ketone (PEEK), a polyamide (PA), polyether ketone ether ketone ketone (PEKEKK), polyether ketone (PEK), a liquid crystal polymer (LCP), polytetrafluoroethylene (PTFE), a copolymer of tetrafluoroethylene and ethylene (ETFE), polychlorotrifluoroethylene (PCTFE), polyimide (PI), a polyamide-imide (PAI), polyethersulfone (PES), polyphenylsulfone (PPSU), polyetherimide (PEI), and a polysulfone (PSU). Among these, PPS or PEEK is particularly preferable. Examples of PPS include M2888 and E2180 produced by Toray Industries, Inc. and

FZ-2140 and FZ-6600 produced by Dainippon Ink and Chemicals, Inc.

The average particle diameter of the resin used before shaping the plate 2 is preferably in the range of 1 μm to 300 μm inclusive, more preferably in the range of 5 μm to 150 μm inclusive, and even more preferably in the range of 10 μm to 100 μm inclusive. In this situation, the average particle diameter denotes a particle diameter measured by using a laser diffraction/scattering particle diameter distribution measuring method. The same applies to the method for measuring the average particle diameters hereinafter.

The graphite structuring the plate 2 may be any of the following: artificial graphite, expanded graphite, natural graphite, and others. In this situation, the expanded graphite denotes graphite or a graphite intercalation compound obtained by expanding the spaces between graphite layers by having a layer of another substance enter (called "intercalation") on a specific plane in a structure in which regular hexagonal planes of graphite are stacked together. As the expanded graphite, BSP-60A (having an average particle diameter of 60 μm) or EXP-50SM produced by Fuji Graphite Works Co., Ltd. may be used, for example. As the artificial graphite, 1707SJ (average particle diameter: 125 μm), AT-No. 5S (average particle diameter: 52 μm), AT-No. 10S (average particle diameter: 26 μm), or AT-No. 20S (average particle diameter: 10 μm) produced by Oriental Sangyo Co., Ltd. or PAG or HAG produced by Nippon Graphite Industries, Co., Ltd. may be used, for example. As the natural graphite, CNG-75N (average particle diameter: 43 μm) produced by Fuji Graphite Works Co., Ltd. or CPB (scale-shaped graphite powder having an average particle diameter of 19 μm) produced by Nippon Graphite Industries, Co., Ltd. may be used. Further, the shapes of the graphite particles are not particularly limited. It is possible to select from flakes, scale-like shapes, and spherical shapes, as appropriate. Further, the graphite may partially contain amorphous carbon.

The average particle diameter of the graphite used before shaping the plate 2 is preferably in the range of 1 μm to 500 μm inclusive, more preferably in the range of 3 μm to 300 μm inclusive, and even more preferably in the range of 10 μm to 150 μm inclusive.

The particle diameters of the graphite and the resin may be adjusted separately before the two are mixed together to be used for shaping the plate 2. Alternatively, the graphite and the resin may be kneaded together at first, before being pulverized so that the particle diameters are adjusted for the use in shaping the plate 2. When the graphite and the resin are kneaded together before being pulverized so that the particle diameters are adjusted, the average particle diameter of a powder mixture is preferably in the range of 1 μm to 500 μm inclusive, more preferably in the range of 3 μm to 300 μm inclusive, and even more preferably in the range of 10 μm to 150 μm inclusive.

The mass ratio between the graphite and the resin structuring the plate 2 can be defined as: graphite:resin = 70 to 95 parts by mass:30 to 5 parts by mass. For example, by mixing 5 parts by mass of the resin with the graphite in an amount ranging from 70 parts by mass to 95 parts by mass inclusive, it is possible to obtain a constituent material of the separator 1. As another example, by mixing 30 parts by mass of the resin with the graphite in an amount ranging from 70 parts by mass to 95 parts by mass inclusive, it is also similarly possible to obtain a constituent material of the separator 1. It is preferable to configure the separator 1 to contain more graphite than resin by a mass ratio. A more preferable mass ratio between the graphite and the resin is achieved by mixing 1 part by mass of the resin, with 10 parts by mass of the graphite or with the graphite in an amount ranging from 10.1 parts by mass to 20 parts by mass inclusive. As explained above, when more graphite than resin is used by parts by mass, because graphite particles have more contact sites with one another than in conventional separators, it is possible to further lower the electrical resistance (i.e., to further increase the electrical conductivity) of the separator 1. In a typical sample of the separator 1, volume resistivity is 5 mΩcm or lower.

The aramid fiber being one of the constituent elements of the plate 2 is para-aramid fiber containing a meta-phenylene group expressed with Formula (1) presented below. In Formula (1), m and n are positive numbers. The ratio m:n is preferably in the range of 5:1 to 1:9, and more preferably in the range of 4:1 to 1:4. The degree of polymerization of the aramid fiber is evaluated by using intrinsic viscosity η expressed with Expression (1) presented below. The value of η is preferably in the range of 1.5 to 7.0 inclusive and more preferably in the range of 2.0 to 5.0, inclusive. To measure the viscosity, an Ostwald viscometer is used. The solution temperature at the time of measuring is 30°C.

[Formula 1]

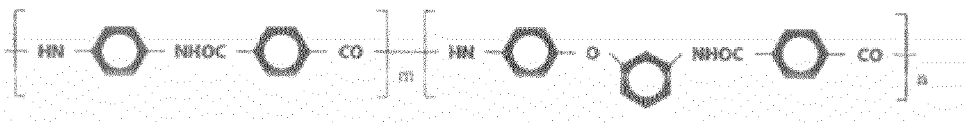

(1)

[Expression 1]

$$\eta = \ln(t/t_o) / C \quad \cdots (\mathrm{I})$$

In Expression 1, to denotes flow time [sec] of concentrated sulfuric acid; t denotes flow time [sec] of a solution obtained by dissolving a polymer in concentrated sulfuric acid with a concentration of 0.5 g/100 mL; and C denotes a concentration [g/100 mL] of the polymer solution.

Examples of the para-aramid fiber containing a meta-phenylene group include: Technora T320NW 1-12 (having an average fiber length of 1.0 mm and an average fiber diameter of 20 μm); Technora T32PNW 3-12 (having an average fiber length of 3.2 mm and an average fiber diameter of 18 μm); and Technora T320NW 6-12 (having an average fiber length of 6.0 mm and an average fiber diameter of 20 μm), which are produced by Teijin Limited. In the present application, each of the average fiber lengths is an average value of the fiber lengths obtained by measuring 20 arbitrary fibers by using an optical microscope. Each of the average fiber diameters is an average value of the fiber diameters obtained by measuring 20 arbitrary fibers by using a scanning electron microscope. In this situation, when the end face of the fiber was not circular, the longest long side of the end face was regarded as the diameter of the fiber.

The average fiber length of the para-aramid fiber containing the meta-phenylene group and used before shaping the plate 2 is preferably in the range of 0.5 mm to 8.0 mm inclusive, and more preferably in the range of 1 mm to 6 mm inclusive. The average fiber diameter of the para-aramid fiber containing the meta-phenylene group and used before shaping the plate 2 is preferably in the range of 2 μm to 50 μm inclusive, and more preferably in the range of 5 μm to 30 μm inclusive.

By having the aramid fiber contained in the plate 2, because the aramid fiber has higher equilibrium water absorption than the base resin (e.g., PPS), hydrophilicity of the surface of the separator 1 is improved, which works effectively in discharging water along the surfaces of the separator 1 when water or water vapor occurred from a reaction between hydrogen and oxygen. In addition, having the aramid fiber contained is also effective in providing the base resin with heat resistance, strength, chemical resistance, and the like. In particular, when the plate 2 contains the para-aramid fiber containing a meta-phenylene group, it is possible to improve bending strength and bending strain of the separator 1, while preventing electrical conductivity thereof from being degraded. As the aramid fiber, only para-aramid fiber containing a meta-phenylene group may be used. Alternatively, para-aramid fiber containing a meta-phenylene group and para-aramid fiber containing no meta-phenylene group may be used. When para-aramid fiber containing no meta-phenylene group is used, it is preferable when the content thereof is equal to or smaller than 10 mass % in relation to the mass of the para-aramid fiber containing a meta-phenylene group. The para-aramid fiber containing no meta-phenylene group is added in a small amount because there is an advantage where handling can be improved. More specifically, details can be explained as follows: Para-aramid fiber containing no meta-phenylene group has relatively smaller fiber diameters and does not achieve a strengthening effect by itself, but functions as a binder that puts the resin and the graphite together. For this reason, it is preferable to add the para-aramid fiber containing no meta-phenylene group in such an amount that electric properties will not be lost (equal to or smaller than 10 mass % in relation to the mass of the para-aramid fiber containing a meta-phenylene group), to prevent the resin and graphite particles from falling out of the precursor plate. A typical sample of the separator 1 comprising the plate 2 containing the para-aramid fiber that contains a meta-phenylene group has volume resistivity of 2.5 mΩcm or smaller.

It is preferable when the content of the aramid fiber (the para-aramid fiber containing a meta-phenylene group) in the plate 2 is in the range of 20 parts by mass to 230 parts by mass inclusive, in relation to 100 parts by mass of the resin (excluding the aramid fiber) structuring the plate 2.

(The barrier layers)

Although not being a requisite constituent element, the barrier layers 3 in the present embodiment cover at least the surface on the front side and the surface on the rear side of the plate 2, including the grooves 30, 32 and the surfaces 31 of the plate 2 other than the grooves 30, 32. In other words, the barrier layers 3 cover both surfaces of the plate 2, namely the surface on the front side and the surface on the rear side, including the faces inside the grooves 30 and 32. The barrier layers 3 are, for example, each a film-like covering layer different from the plate 2 and are formed with two types of films that are separate from each other or fused together, namely, a first film 4 being an example of a barrier layer covering the surface on the front side and a second film 5 being an example of another barrier layer covering the surface on the rear side. In the present embodiment, the barrier layers 3 are separate as the first film 4 and the second film 5, which adhere to the surface on the front side and to the surface on the rear side of the plate 2, respectively. However, the barrier layers 3 may have a bag-like form in which the first film 4 and the second film 5 are joined together, to wrap the plate 2.

Figure 2B presents enlarged views of variations a, b, and c of C which is a part of B being a part of Figure 2A.
In mode "a", on a surface of the plate 2, a film of which a principal material is preferably resin or rubber is provided. In mode "a", a barrier layer 3 is a film-like covering layer F different from the plate 2. Further, in mode "b", a barrier layer 3 is provided so that the plate 2 is, in the vicinity of the surface thereof, impregnated with resin or rubber. In mode "b", the barrier layer 3 is a filling layer M in which the resin or the rubber fills the spaces between the particles or fibers structuring the plate 2. Further, in mode "c", a barrier layer 3 includes a filling layer M and a covering layer F. As explained herein, the barrier layer 3 preferably use one of modes a, b, and c. However, as long as the barrier layer 3 has a better gas barrier property than that of the plate 2, the barrier layer 3 may use a mode other than modes a, b, and c. In the present application, the "gas barrier property" or a "gas barrier capability" denotes a characteristic that prevents gas from passing through. Next, the barrier layer 3 in mode "a" will primarily be explained.
The barrier layer 3 is preferably a layer of resin or rubber. For the barrier layer 3, one or two or more may be selected as principal material(s) from among the abovementioned preferable options for the resin to structure the plate 2, and more preferably, at least one of PEEK and PPS may be used as the principal material(s). In this situation, the "principal material" denotes a material that accounts for more than 50 mass % of the barrier layer 3. As long as the principal material accounts for more than 50 mass % relative to the mass of the barrier layer 3, the percentage may be 51 mass %, 60 mass %, 70 mass %, 80 mass %, 90 mass %, 95 mass %, or 100 mass %, for example.
The thickness of the barrier layer 3 is preferably in the range of 2 μm to 50 μm inclusive and more preferably in the range of 4 μm to 35 μm inclusive. When the thickness of the barrier layer 3 is 2 μm or larger, or even 4 μm or larger, it is possible to further enhance the gas barrier property, to further enhance the strength (the bending strength), and to further enhance tractability of the separator 1. On the contrary, when the thickness of the barrier layer 3 is 50 μm or smaller, or even 35 μm or smaller, it is possible to further lower the volume resistivity. The first film 4 and the second film 5 may have mutually the same thickness or mutually-different thicknesses. In the present embodiment, the strength denotes a bending strength measured according to JIS K 7171.
The resin structuring the plate 2 and the resin structuring the barrier layer 3 may be the same type of thermoplastic resin. In that situation, because it is possible to integrally form the resin in the vicinity of the surface of the plate 2 with the barrier layer 3 covering the plate 2, it is possible to further increase the strength of the separator 1. The thermoplastic resin is, preferably, PEEK or PPS.

2. A separator producing method

Next, a separator producing method according to the first embodiment of the present invention will be explained.
The method for producing the separator 1 comprises: a shaping material arranging step of arranging, in a mold, a mixture (an example of the "shaping material") obtained by mixing together at least the graphite, the resin, and the aramid fiber (a constituent element different from the resin; the same applies hereinafter); and a shaping step of performing a shaping process by closing the mold while the shaping material is in the state of being arranged therein. Further, the producing method of the separator 1 (hereinafter simply "producing method") may preferably further comprise a first film arranging step, prior to the shaping material arranging step, of arranging the first film 4 in the mold; and a second film arranging step of arranging the second film 5 over the shaping material arranged in the mold in the shaping material arranging step. In the following embodiments, the separator producing method is preferably a method for producing a fuel cell separator used between cells in a fuel cell. Further, the separator 1 is preferably a separator in the carbon material group. However, the separator 1 is not limited to be used in a fuel cell or fuel cells, and may be used as a plate-like member disposed between cells in a redox flow battery or an electricity storage device of other types such as a capacitor.
Figure 3 shows an example of a flow in main steps in a separator producing method according to the first embodiment. Figure 4 presents cross-sectional views of statuses at the steps in the producing method in Figure 3. Figure 5 presents cross-sectional views of statuses at the steps following Figure 4.
It is possible to produce the separator 1 through a first film arranging step (S100), a shaping material arranging step (S110), a second film arranging step (S120), and a shaping step (S130). In the following sections, S100 through S130 will be explained in detail with reference to Figures 3 to 5.

(1) The first film arranging step (S100)

This step is a step of arranging, in a mold 60, the first film 4 for forming the barrier layer 3 on at least the surface on the rear side of the plate 2. More specifically, a bottom mold 40 structuring the mold 60 is prepared, and the first film 4 is placed in a recessed part 41 of the bottom mold 40 (see Figure 4 (a) and (b)). On the inner bottom face of the recessed part 41, the bottom mold 40 comprises an uneven surface 42 capable of transferring and forming the grooves 32.

(2) The shaping material arranging step (5110)

This step is a step of supplying, to the inside of the mold 60, a mixture 2a containing the graphite, the resin, and the aramid fiber. More specifically, the mixture 2a is supplied to the top of the first film 4 placed in the bottom mold 40 (see Figure 4 (c)). As the aramid fiber, the mixture 2a contains at least the para-aramid fiber containing a meta-phenylene group mentioned above.

(3) The second film arranging step (5120)

This step is a step of arranging the second film 5 for forming the barrier layer 3 on at least the surface on the front side of the plate 2, over the mixture 2a arranged in the mold 60 in the shaping material arranging step (S110). More specifically, the second film 5 is placed over the mixture 2a arranged in the recessed part 41 of the bottom mold 40 (see Figure 4 (d)).

(4) The shaping step (S130)

This step is a step of producing the shaped body by hardening the layered structure comprising the first film 4, the mixture 2a, and the second film 5. More specifically, a top mold 50 structuring the mold 60 is prepared and placed over the bottom mold 40 on the recessed part 41 side, and the bottom mold 40 and the top mold 50 are closed together (see Figure 5 (e) and (f)). The top mold 50 has a recessed part 51 on the side facing the recessed part 41 of the bottom mold 40. On the inner bottom face thereof, the recessed part 51 comprises an uneven surface 52 capable of transferring and forming the grooves 30. After the mold 60 is clamped, the layered structure is shaped by applying heat thereto (see Figure 5 (g)). As a result, the mixture 2a is hardened and forms the plate 2. Further, as a result of the transfer of the uneven surfaces 41 and 51, the grooves 30 and 32 in the state of being covered by the barrier layers 3 (the first film 4 and the second film 5) are formed (see Figure 5 (h)).

After the shaping step (S 130), the mold 60 is opened, and the separator 1 is thus completed. In the producing method of the separator 1, one selected from between the first film arranging step (S100) and the second film arranging step (S120) may be omitted.

Figure 6 shows an example of a flow in main steps in a producing method according to a second embodiment. Figure 7 presents cross-sectional views of statuses at the steps in the producing method in Figure 6. Figure 8 presents cross-sectional views of statuses at the steps following Figure 7.

The producing method shown in Figure 6 is a method for producing the separator 1 by which a precursor plate is produced by semi-hardening the mixture 2a, and subsequently, the precursor plate is shaped as being sandwiched between the first film 4 and the second film 5. In other words, in the present producing method, before the shaping step, a pre-shaping step is performed to obtain the precursor plate in the semi-hardened state.

It is possible to produce the separator 1 through a shaping material arranging step (S200), a pre-shaping step (S210), a first film arranging step (S300), a precursor plate arranging step (S310), a second film arranging step (S320), and a shaping step (S330). In the following sections, S200 through S210 and S300 through S330 will be explained in detail with reference to Figures 6 to 8.

(1) The shaping material arranging step (S200)

This step is a step of supplying the mixture 2a containing the graphite, the resin, and the aramid fiber to the inside of a mold 65. More specifically, the mixture 2a is supplied to a recessed part 46 of a bottom mold 45 (see Figure 7 (a)). As the aramid fiber, the mixture 2a contains at least the para-aramid fiber containing a meta-phenylene group mentioned above.

(2) Pre-shaping step (S210)

This step is a step of producing the precursor plate by semi-hardening the mixture 2a. More specifically, a top mold 55 structuring the mold 65 is prepared and placed over the bottom mold 45 on the recessed part 46 side, and the bottom mold 45 and the top mold 55 are closed together (see Figure 7 (b), (c), and (d)). The top mold 55 has a recessed part 56 on the side facing the recessed part 46 of the bottom mold 45. After the mold 65 is clamped, the mixture 2a is semi-hardened by applying heat thereto. The temperature at this time is lower than the temperature used in the shaping step. As a result, a precursor plate (the mixture in the semi-hardened state) 70 is completed.

(3) The first film arranging step (S300)

This step is a step of arranging the first film 4 in the mold 60 (see Figure 8 (e)). The details are the same as the first film arranging step (S100) in the producing method according to the first embodiment.

(4) The precursor plate arranging step (S310)

This step is a step of arranging the precursor plate 70 on the first film 4 placed in the recessed part 41 (see Figure 8 (f)).

(5) The second film arranging step (S320)

This step is a step of arranging the second film 5 over the mixture 2a structuring the precursor plate 70 in the mold 60, after the precursor plate arranging step (S310) (see Figure 8 (g)).

(6) The shaping step (S330)

This step is a step of producing the shaped body by hardening the layered structure comprising the first film 4, the precursor plate 70 (structured with the mixture 2a), and the second film 5. More specifically, the top mold 50 structuring the mold 60 is prepared and placed over the bottom mold 40 on the recessed part 41 side, and the bottom mold 40 and the top mold 50 are closed together (see Figure 8 (h) and (i)). After the mold 60 is clamped, the layered structure is shaped by applying heat thereto. As a result, the mixture 2a is hardened and forms the plate 2. Further, as a result of the transfer of the uneven surfaces 41 and 51, the grooves 30 and 32 in the state of being covered by the barrier layers 3 (the first film 4 and the second film 5) are formed (see Figure 8 (j)).

After the shaping step (S330), the mold 60 is opened, and the separator 1 is thus completed. In the producing method of the separator 1, one selected from between the first film arranging step (S300) and the second film arranging step (S320) may be omitted.

Figure 9 presents a cross-sectional view of a status when a grooved plate is used in place of the precursor plate, in a separator producing method according to a modification example.

In the present modification example, the bottom mold 45 and the top mold 55 each have an uneven surface formed on the inner bottom face thereof. In the precursor plate arranging step (S310), a grooved plate 70a comprising pre-groove parts 71 and 72 that are shallower than the grooves 30 and 32 that serve as flow paths is produced. In the precursor plate arranging step (S310), the grooved plate 70a is arranged on the first film 4, so that the pre-groove part 72 on the grooved plate 70a fits the uneven surface 42 (see Figure 9). After that, the uneven surface 52 of the top mold 50 is fit to the pre-groove part 71 on the grooved plate 70a, so that the top mold 50 and the bottom mold 40 are closed together, and the mold 60 is thus clamped. Further, by performing the shaping step (S330) in the producing method according to the second embodiment, the grooves 30 and 32 are formed by deepening the pre-groove parts 71 and 72 with the uneven surfaces 42 and 52, and the separator 1 is thus completed (see Figure 8 (i) and (j)).

In the present modification example, the grooved plate 70a may have the grooves 30 and 32, in place of the pre-groove parts 71 and 72. In that situation, in the precursor plate arranging step (S310), the grooved plate 70a is arranged on the first film 4 so that the grooves 32 on the grooved plate 70a fit the uneven surface 42. Ater that, the mold 60 is clamped so that the uneven surface 52 of the top mold 50 is fit to the grooves 30 on the grooved plate 70a.

<Second Embodiment>

Next, the second embodiment of the present invention will be explained. For the separator and the producing method thereof according to the second embodiment, duplicate explanations of some of the elements that are the same as those in the first embodiment shall be omitted, and the explanations in the first embodiment serve as a substitute.

1. A separator

Figure 10 presents a cross-sectional view of a separator according to the second embodiment at A-A similar to Figure 2A and an enlarged view of B which is a part thereof.

A separator 1a according to the present embodiment comprises the plate 2. The separator 1a according to the present embodiment does not comprise the barrier layers 3 (the first film 4 and the second film 5), unlike the separator 1 according to the first embodiment. The separator 1a is the same as the separator 1, except for not comprising the barrier layers 3.

2. A separator producing method

Figure 11 shows an example of a flow in main steps in a separator producing method according to the second embodiment.

The method for producing of the separator 1a comprises: a shaping material arranging step (S400) of arranging, in a mold, a mixture (an example of the "shaping material") obtained by mixing together at least the graphite, the resin, and the aramid fiber; and a shaping step (S410) of performing a shaping process by closing the mold while the shaping material is in the state of being arranged therein. The shaping material arranging step (S400) corresponds to the shaping material arranging step (S110) except for being performed without arranging the first film 4 in the mold 60. The shaping step (S410) corresponds to the shaping step (S130) except for being performed without arranging the first film 4 and the second film 5. Accordingly, explanations that are duplicates of those about the producing method of the separator 1 according to the first embodiment above will be omitted.

Figure 12 shows an example of a flow in main steps in a producing method different from Figure 11.

It is possible to produce the separator 1a through a shaping material arranging step (S500), a pre-shaping step (S510), a precursor plate arranging step (S600), and a shaping step (S610).

The shaping material arranging step (S500) corresponds to the shaping material arranging step (S200). The pre-shaping step (S510) corresponds to the pre-shaping step (S210). The precursor plate arranging step (S600) corresponds to the precursor plate arranging step (S310) except for being performed without going through the first film arranging step (S300). The shaping step (S610) corresponds to the shaping step (S330) except for being performed without the first film 4 and the second film 5. Accordingly, explanations that are duplicates of those about the producing method of the separator 1 according to the first embodiment above will be omitted.

<Other Embodiments>

A number of preferable embodiments of the present invention have thus been explained. However, the present invention is not limited to those embodiments and may be carried out with various modifications.

The grooves 30 in the separator 1, 1a may be grooves forming flow paths other than the flow paths in which the gas flows in the directions shown with the white arrows in Figure 1. Further, the grooves 32 may be grooves forming flow paths in any form. For example, the grooves 30 may be grooves forming linear flow paths extending from one end to the other end of the separator 1, while the grooves 32 may be grooves forming linear flow paths extending in a substantially perpendicular direction to the grooves 30. Further, the separator 1, 1a may be formed without at least one of the grooves 30 and the grooves 32.

After the shaping step, a trimming step may be performed to trim an extra area of the first film 4 and/or the second film 5.

The separator 1 comprises the barrier layers 3 on both surfaces, namely the surface on the front side and the surface on the rear side; however, the separator 1 may comprise a barrier layer 3 only one of the surfaces selected from between the surface on the front side and the surface on the rear side. When the barrier layer 3 is formed only on the one of the surfaces, either the second film arranging step (S120, S320) or the first film arranging step (S100, S300) shall be omitted.

The producing method in the first embodiment is a method for producing the fuel cell separator in which the barrier layer 3 is a layer of resin or rubber; however, the producing method may be a method for producing a fuel cell separator in which the barrier layer 3 is a layer in either mode "b" or mode "c" in Figure 2B.

Examples

Next, the examples of the present invention will be explained while being compared with comparison examples. The present invention is not limited to the following examples.

1. Main ingredients of the plate

(1) Graphite

As graphite powder serving as a constituent material of the plate of a separator, the following two types of graphite powder were used: model number 1707SJ (artificial graphite having an average particle diameter of 125 μm) produced by Oriental Kougyou Co., Ltd.; and model number AT-No. 5S (artificial graphite having an average particle diameter of 52 μm) produced by Oriental Kougyou Co., Ltd.

(2) Resin

As the resin serving as a constituent material of the plate of the separator, polyphenylene sulfide (PPS) powder was used. Used as the PPS was PPS fine powder adjusted to have an average particle diameter of 50 μm obtained by freezing and pulverizing PPS powder in a flake form of Torelina M2888 produced by Toray Industries, Inc.

(3) Aramid fiber

As the aramid fiber serving as a constituent material of the plate of the separator, para-aramid fiber containing a meta-phenylene group, para-aramid fiber containing no meta-phenylene group, and meta-aramid fiber were used. As the para-aramid fiber containing a meta-phenylene group, the following three types of aramid fibers produced by Teijin Limited were used: Technora T320NW 1-12 (having an average fiber length of 1.0 mm and an average fiber diameter of 20 μm); Technora T32PNW 3-12 (having an average fiber length of 3.2 mm and an average fiber diameter of 18 μm); and Technora T320NW 6-12 (having an average fiber length of 6.0 mm and an average fiber diameter of 20 μm). As the para-aramid fiber containing no meta-phenylene group, the following four types of aramid fibers produced by Teijin Limited were used: Twaron 1080 (having an average fiber length of 6.1 mm and an average fiber diameter of 24 μm); Twaron 1094 (having an average fiber length of 1.1 mm and a specific surface area of 13.6 $m^2/g$); Twaron 1097 (having an average fiber length of 1.2 mm and a specific surface area of 6.9 $m^2/g$); and Twaron D8016 (having an average fiber length of 0.8 mm). As the meta-aramid fiber, Conex C11-C (having an average fiber length of 3.1 mm and an average fiber diameter of 21 μm) produced by Teijin Limited was used.

(4) Other types of fibers

As other types of fibers serving as constituent materials of the plate of the separator, three types of fibers such as PAN-based carbon fibers, pitch-based carbon fiber, and PPS fiber were used. As the PAN-based carbon fibers, the following two types of PAN-based carbon fibers produced by Teijin Limited were used: Tenax HT C110 (having an average fiber length of 7.3 mm and an average fiber diameter of 7 μm) and Tenax HT C137 (having an average fiber length of 6.0 mm and an average fiber diameter of 7 μm). As the pitch-based carbon fiber, GRANOC XN-100-03Z (having an average fiber length of 3.3 mm and an average fiber diameter of 11 μm) produced by Nippon Graphite Fiber Co., Ltd. was used. As the PPS fiber, TORCON S307 (having an average fiber length of 6.0 mm and an average fiber diameter of 13 μm) produced by Toray Industries, Inc. was used.

2. Film

As a film for the separator, a film made of PPS was used. As the film made of PPS, a film having a thickness of 9 μm (model number: Torelina 9-3071) produced by Toray Industries, Inc. was used.

3. Mold

Used as the mold for a shaping purpose was a mold of a top/bottom separate type using pre-hardened steel NAK80 produced by Daido Steel Co., Ltd. as a material. Formed inside the mold in a closed state is a space (approximately 63 $cm^3$) in which it is possible to shape the separator. Further, formed in the inner bottom part of each of the top and the bottom molds is the uneven surface for forming the grooves of the separator.

4. Evaluation methods

(1) Volume resistivity

The volume resistivity of the separator was measured by using a device (Loresta-GX T-700) produced by Nittoseiko Analytech Co., Ltd., according to JIS K 7194. A volume resistivity value smaller than 2.5 mΩcm was evaluated as a pass.

(2) Bending test

A bending test for the separators was performed by using a device (Autograph AG-100kNG) produced by Shimadzu Corporation, according to JIS K 7171.

• Bending strength

A bending strength exceeding 40 MPa was evaluated as a pass.

• Bending strain

A bending strain exceeding 0.7% was evaluated as a pass.

(3) Overall evaluations

When the evaluations of all the property values were evaluated as a pass, the product was evaluated as a pass. On the contrary, when the evaluation of at least one of the property values was evaluated as a fail, the product was evaluated as a fail.

5. Producing the separators

<Examples>

(1) Example 1

The following was prepared: 977.8 parts by mass (where 1 part by mass = 1 g; the same applies to <Examples> hereinafter) of artificial graphite particles (model number: 1707SJ); 244.4 parts by mass of artificial graphite particles (model number AT-No. 5S); 100 parts by mass of PPS powder; 62.5 parts by mass of para-aramid fiber containing a meta-phenylene group (Technora T320NW 1-12); and 4.2 parts by mass of para-aramid fiber containing no meta-phenylene group (Twaron D8016). A slurry having a solid content of 1% was produced by mixing and dispersing the above in water. The slurry was input to a strainer comprising an input opening of a 25 cm square, to obtain a wet sheet, which was a sheet formed with residue from the straining. The wet sheet was set on a presser heated to 150°C and pressured and heated for approximately 20 minutes with surface pressure of 8 MPa. By drying the wet sheet and removing the moisture, a precursor plate having a thickness of 2 mm and an area-based weight of 2200 g/m$^2$ was produced in which the artificial graphite particles, the PPS particles, and the aramid fibers were dispersed. Next, a PPS film having a thickness of 9 μm was placed in the recessed part inside the bottom mold structuring the separate-type mold, and the abovementioned precursor plate was supplied to the top of the film. After that, a PPS film having a thickness of 9 μm was placed over the precursor plate. Subsequently, a shaping process was performed by closing together the top mold and the bottom mold structuring the separate-type mold. The shaping process was performed by applying heat until the temperature of the mold reached 340°C with surface pressure of 4 MPa, and after the surface pressure was increased to 90 MPa, the workpiece was held for one minute. Subsequently, while keeping the pressure the same, the mold was cooled under pressure until the temperature reached 30°C. When the shaping process was finished, the mold was opened to take out the shaped body, and the production of a separator was thus finished. The separator was evaluated by using the abovementioned evaluation method.

(2) Example 2

A separator was produced and evaluated under the same conditions as those in Example 1, except for adjusting the mixture by preparing the following: 1261.1 parts by mass of artificial graphite particles (model number: 1707SJ); 100 parts by mass of PPS powder; and 27.8 parts by mass of para-aramid fiber containing a meta-phenylene group (Technora T32PNW 3-12).

(3) Example 3

A separator was produced and evaluated under the same conditions as those in Example 1, except for adjusting the mixture by preparing the following: 977.8 parts by mass of artificial graphite particles (model number: 1707SJ); 244.4 parts by mass of artificial graphite particles (model number: AT-No.5S); 100 parts by mass of PPS powder; and 66.7 parts by mass of para-aramid fiber containing a meta-phenylene group (Technora T32PNW 3-12).

(4) Example 4

A separator was produced and evaluated under the same conditions as those in Example 1, except for adjusting the mixture by preparing the following: 1083.3 parts by mass of artificial graphite particles (model number: 1707SJ); 100

parts by mass of PPS powder; and 205.6 parts by mass of para-aramid fiber containing a meta-phenylene group (Technora T32PNW 3-12).

(5) Example 5

A separator was produced and evaluated under the same conditions as those in Example 1, except for adjusting the mixture by preparing the following: 2308.3 parts by mass of artificial graphite particles (model number: AT-No.5S); 100 parts by mass of PPS powder; 111.1 parts by mass of para-aramid fiber containing a meta-phenylene group (Technora T32PNW 3-12); 8.3 parts by mass of para-aramid fiber containing no meta-phenylene group (Twaron 1094); and 250 parts by mass of pitch-based carbon fiber 250.

(6) Example 6

A separator was produced and evaluated under the same conditions as those in Example 1, except for adjusting the mixture by preparing the following: 809.2 parts by mass of artificial graphite particles (model number: 1707SJ); 202.3 parts by mass of artificial graphite particles (model number: AT-No.5S); 100 parts by mass of PPS powder; 34.5 parts by mass of para-aramid fiber containing a meta-phenylene group (Technora T32PNW 3-12); and 3.4 parts by mass of para-aramid fiber containing no meta-phenylene group (Twaron D8016).

(7) Example 7

A separator was produced and evaluated under the same conditions as those in Example 1, except for using 62.5 parts by mass of para-aramid fiber containing a meta-phenylene group (Technora T32PNW 3-12) in place of 62.5 parts by mass of the para-aramid fiber containing a meta-phenylene group (Technora T320NW 1-12).

(8) Example 8

A separator was produced and evaluated under the same conditions as those in Example 1, except for using 62.5 parts by mass of para-aramid fiber containing a meta-phenylene group (Technora T320NW 6-12) and 4.2 parts by mass of para-aramid fiber containing no meta-phenylene group (Twaron 1094), in place of 62.5 parts by mass of the para-aramid fiber containing a meta-phenylene group (Technora T320NW 1-12) and 4.2 parts by mass of the para-aramid fiber containing no meta-phenylene group (Twaron D8016).

<Comparison Examples>

(1) Comparison Example 1

Ball-mill pulverization using zirconia balls was performed on 1000 parts by mass of artificial graphite particles (model number: 1707SJ) and 100 parts by mass of PPS powder, to mix and pulverize the two types of powder. The ball-mill pulverization was ended when it was confirmed that the granularity of the powder mixture reached an average particle diameter of 90 ± 10 μm by measuring the granularity distribution (through a measuring process implementing a laser diffraction/scattering particle diameter distribution measuring method). Subsequently, to the recessed part inside the bottom mold structuring a separate-type mold, a PPS film having a thickness of 9 μm was placed, and the mixture (the graphite + PPS) in the powder state resulting from the ball-mill pulverization was supplied to the top of the film. After that, the thickness of the mixture was made substantially uniform, before a PPS film having a thickness of 9 μm was placed thereon. Subsequently, a shaping process was performed by closing together the top mold and the bottom mold structuring the separation-type mold. Comparison Example 1 used a plate consisting of only the graphite and PPS, without containing any other fiber besides the PPS as constituent materials thereof. The shaping process was performed with surface pressure of 47 MPa, and the workpiece was held for three minutes so that the temperature of the mold increased up to 360°C. When the shaping process was finished, the mold was opened to take out the shaped body, and the production of the separator was thus finished. The separator was evaluated by using the abovementioned evaluation method.

(2) Comparison Example 2

Except for using 62.5 parts by mass of para-aramid fiber containing no meta-phenylene group (Twaron 1080) in place of 62.5 parts by mass of the para-aramid fiber containing a meta-phenylene group (Technora T320NW 1-12), a separator was produced and evaluated under the same conditions as those in Example 1. Comparison Example 2

used a plate that did not contain, as a constituent material thereof, para-aramid fiber containing a meta-phenylene group.

(3) Comparison Example 3

Except for using 62.5 parts by mass of para-aramid fiber containing no meta-phenylene group (Twaron 1094) in place of 62.5 parts by mass of the para-aramid fiber containing a meta-phenylene group (Technora T320NW 1-12), a separator was produced and evaluated under the same conditions as those in Example 1. Comparison Example 3 used a plate that did not contain, as a constituent material thereof, para-aramid fiber containing a meta-phenylene group.

(4) Comparison Example 4

Except for using 62.5 parts by mass of para-aramid fiber containing no meta-phenylene group (Twaron 1097) in place of 62.5 parts by mass of the para-aramid fiber containing a meta-phenylene group (Technora T320NW 1-12), a separator was produced and evaluated under the same conditions as those in Example 1. Comparison Example 4 used a plate that did not contain, as a constituent material thereof, para-aramid fiber containing a meta-phenylene group.

(5) Comparison Example 5

Except for using 66.7 parts by mass, instead of 4.2 parts by mass, of para-aramid fiber containing no meta-phenylene group (Twaron D8016), without using 62.5 parts by mass of the para-aramid fiber containing a meta-phenylene group (Technora T320NW 1-12), a separator was produced and evaluated under the same conditions as those in Example 1. Comparison Example 5 used a plate that did not contain, as a constituent material thereof, para-aramid fiber containing a meta-phenylene group.

(6) Comparison Example 6

Except for using 62.5 parts by mass of meta-aramid fiber (Conex C11-C) in place of 62.5 parts by mass of the para-aramid fiber containing a meta-phenylene group (Technora T320NW 1-12), a separator was produced and evaluated under the same conditions as those in Example 1. Comparison Example 6 used a plate that did not contain, as a constituent material thereof, para-aramid fiber containing a meta-phenylene group.

(7) Comparison Example 7

Except for using 62.5 parts by mass of PAN-based carbon fiber (Tenax HT C110) in place of 62.5 parts by mass of the para-aramid fiber containing a meta-phenylene group (Technora T320NW 1-12), a separator was produced and evaluated under the same conditions as those in Example 1. Comparison Example 7 used a plate that did not contain, as a constituent material thereof, para-aramid fiber containing a meta-phenylene group.

(8) Comparison Example 8

Except for using 62.5 parts by mass of PAN-based carbon fiber (Tenax HT C137) in place of 62.5 parts by mass of the para-aramid fiber containing a meta-phenylene group (Technora T320NW 1-12), a separator was produced and evaluated under the same conditions as those in Example 1. Comparison Example 8 used a plate that did not contain, as a constituent material thereof, para-aramid fiber containing a meta-phenylene group.

(9) Comparison Example 9

Except for using 62.5 parts by mass of PPS fiber in place of 62.5 parts by mass of the para-aramid fiber containing a meta-phenylene group (Technora T320NW 1-12), a separator was produced and evaluated under the same conditions as those in Example 1. Comparison Example 9 used a plate that did not contain, as a constituent material thereof, para-aramid fiber containing a meta-phenylene group.

6. Results

Tables 1 to 5 present the producing conditions of the Examples and the comparison examples, together with evaluation results.

[Table 1]

| | MODEL NUMBER | EXAMPLE 1 | EXAMPLE 2 | EXAMPLE 3 | EXAMPLE 4 |
|---|---|---|---|---|---|
| PPS | M2888 | 100 PARTS BY MASS | 100 PARTS BY MASS | 100 PARTS BY MASS | 100 PARTS BY MASS |
| ARAMID FIBER | T320NW 1-12 | 62.5 PARTS BY MASS | 0 PARTS BY MASS | 0 PARTS BY MASS | 0 PARTS BY MASS |
| | T32PNW 3-12 | 0 PARTS BY MASS | 27.8 PARTS BY MASS | 66.7 PARTS BY MASS | 205.6 PARTS BY MASS |
| | T320NW 6-12 | 0 PARTS BY MASS | 0 PARTS BY MASS | 0 PARTS BY MASS | 0 PARTS BY MASS |
| | 1080 | 0 PARTS BY MASS | 0 PARTS BY MASS | 0 PARTS BY MASS | 0 PARTS BY MASS |
| | 1094 | 0 PARTS BY MASS | 0 PARTS BY MASS | 0 PARTS BY MASS | 0 PARTS BY MASS |
| | 1097 | 0 PARTS BY MASS | 0 PARTS BY MASS | 0 PARTS BY MASS | 0 PARTS BY MASS |
| | D8016 | 4.2 PARTS BY MASS | 0 PARTS BY MASS | 0 PARTS BY MASS | 0 PARTS BY MASS |
| | C11-C | 0 PARTS BY MASS | 0 PARTS BY MASS | 0 PARTS BY MASS | 0 PARTS BY MASS |
| PAN-BASED CARBON FIBER | HT C110 | 0 PARTS BY MASS | 0 PARTS BY MASS | 0 PARTS BY MASS | 0 PARTS BY MASS |
| | HT C137 | 0 PARTS BY MASS | 0 PARTS BY MASS | 0 PARTS BY MASS | 0 PARTS BY MASS |
| PITCH-BASED CARBON FIBER | XN-100-03Z | 0 PARTS BY MASS | 0 PARTS BY MASS | 0 PARTS BY MASS | 0 PARTS BY MASS |
| PPS FIBER | S307 | 0 PARTS BY MASS | 0 PARTS BY MASS | 0 PARTS BY MASS | 0 PARTS BY MASS |
| GRAPHITE | 1707SJ | 977.8 PARTS BY MASS | 1261.1 PARTS BY MASS | 977.8 PARTS BY MASS | 1083.3 PARTS BY MASS |
| | AT-No.5S | 244.4 PARTS BY MASS | 0 PARTS BY MASS | 244.4 PARTS BY MASS | 0 PARTS BY MASS |
| TOTAL | | 1388.9 PARTS BY MASS | 1388.9 PARTS BY MASS | 1388.9 PARTS BY MASS | 1388.9 PARTS BY MASS |
| VOLUME RESISTIVITY mΩcm < 2.5 | | 2.20 PASS | 1.53 PASS | 1.84 PASS | 2.48 PASS |
| BENDING STRENGTH MPa > 40 | | 41.1 PASS | 41.4 PASS | 46.2 PASS | 63.0 PASS |
| BENDING STRAIN % > 0.7 | | 0.72 PASS | 0.85 PASS | 1.11 PASS | 2.03 PASS |
| OVERALL EVALUATION | | PASS | PASS | PASS | PASS |

[Table 2]

| | MODEL NUMBER | EXAMPLE 5 | EXAMPLE 6 | EXAMPLE 7 | EXAMPLE 8 |
|---|---|---|---|---|---|
| PPS | M2888 | 100 PARTS BY MASS | 100 PARTS BY MASS | 100 PARTS BY MASS | 100 PARTS BY MASS |
| ARAMID FIBER | T320NW 1-12 | 0 PARTS BY MASS | 0 PARTS BY MASS | 0 PARTS BY MASS | 0 PARTS BY MASS |
| | T32PNW 3-12 | 111.1 PARTS BY MASS | 34.5 PARTS BY MASS | 62.5 PARTS BY MASS | 0 PARTS BY MASS |
| | T320NW 6-12 | 0 PARTS BY MASS | 0 PARTS BY MASS | 0 PARTS BY MASS | 62.5 PARTS BY MASS |
| | 1080 | 0 PARTS BY MASS | 0 PARTS BY MASS | 0 PARTS BY MASS | 0 PARTS BY MASS |
| | 1094 | 8.3 PARTS BY MASS | 0 PARTS BY MASS | 0 PARTS BY MASS | 4.2 PARTS BY MASS |
| | 1097 | 0 PARTS BY MASS | 0 PARTS BY MASS | 0 PARTS BY MASS | 0 PARTS BY MASS |
| | D8016 | 0 PARTS BY MASS | 3.4 PARTS BY MASS | 4.2 PARTS BY MASS | 0 PARTS BY MASS |
| | C11-C | 0 PARTS BY MASS | 0 PARTS BY MASS | 0 PARTS BY MASS | 0 PARTS BY MASS |
| PAN-BASED CARBON FIBER | HTC110 | 0 PARTS BY MASS | 0 PARTS BY MASS | 0 PARTS BY MASS | 0 PARTS BY MASS |
| | HT C137 | 0 PARTS BY MASS | 0 PARTS BY MASS | 0 PARTS BY MASS | 0 PARTS BY MASS |
| PITCH-BASED CARBON FIBER | XN-100-03Z | 250.0 PARTS BY MASS | 0 PARTS BY MASS | 0 PARTS BY MASS | 0 PARTS BY MASS |
| PPS FIBER | S307 | 0 PARTS BY MASS | 0 PARTS BY MASS | 0 PARTS BY MASS | 0 PARTS BY MASS |
| GRAPHITE | 1707SJ | 0 PARTS BY MASS | 809.2 PARTS BY MASS | 977.8 PARTS BY MASS | 977.8 PARTS BY MASS |
| | AT-No.5S | 2308.3 PARTS BY MASS | 202.3 PARTS BY MASS | 244.4 PARTS BY MASS | 244.4 PARTS BY MASS |
| TOTAL | | 2777.8 PARTS BY MASS | 1149.4 PARTS BY MASS | 1388.9 PARTS BY MASS | 1388.9 PARTS BY MASS |
| VOLUME RESISTIVITY mΩcm < 2.5 | | 1.17 PASS | 2.40 PASS | 2.46 PASS | 2.35 PASS |
| BENDING STRENGTH MPa > 40 | | 56.1 PASS | 55.7 PASS | 66.6 PASS | 52.3 PASS |
| BENDING STRAIN % > 0.7 | | 0.72 PASS | 0.85 PASS | 1.11 PASS | 2.03 PASS |
| OVERALL EVALUATION | | PASS | PASS | PASS | PASS |

[Table 3]

| | MODEL NUMBER | COMPARISON EXAMPLE 1 | COMPARISON EXAMPLE 2 | COMPARISON EXAMPLE 3 | COMPARISON EXAMPLE 4 |
|---|---|---|---|---|---|
| PPS | M2888 | 100 PARTS BY MASS | 100 PARTS BY MASS | 100 PARTS BY MASS | 100 PARTS BY MASS |
| ARAMID FIBER | T320NW 1-12 | 0 PARTS BY MASS | 0 PARTS BY MASS | 0 PARTS BY MASS | 0 PARTS BY MASS |
| | T32PNW 3-12 | 0 PARTS BY MASS | 0 PARTS BY MASS | 0 PARTS BY MASS | 0 PARTS BY MASS |
| | T320NW 6-12 | 0 PARTS BY MASS | 0 PARTS BY MASS | 0 PARTS BY MASS | 0 PARTS BY MASS |
| | 1080 | 0 PARTS BY MASS | 62.5 PARTS BY MASS | 0 PARTS BY MASS | 0 PARTS BY MASS |
| | 1094 | 0 PARTS BY MASS | 0 PARTS BY MASS | 62.5 PARTS BY MASS | 0 PARTS BY MASS |
| | 1097 | 0 PARTS BY MASS | 0 PARTS BY MASS | 0 PARTS BY MASS | 62.5 PARTS BY MASS |
| | D8016 | 0 PARTS BY MASS | 4.2 PARTS BY MASS | 4.2 PARTS BY MASS | 4.2 PARTS BY MASS |
| | C11-C | 0 PARTS BY MASS | 0 PARTS BY MASS | 0 PARTS BY MASS | 0 PARTS BY MASS |
| PAN-BASED CARBON FIBER | HTC110 | 0 PARTS BY MASS | 0 PARTS BY MASS | 0 PARTS BY MASS | 0 PARTS BY MASS |
| | HT C137 | 0 PARTS BY MASS | 0 PARTS BY MASS | 0 PARTS BY MASS | 0 PARTS BY MASS |
| PITCH-BASED CARBON FIBER | XN-100-03Z | 0 PARTS BY MASS | 0 PARTS BY MASS | 0 PARTS BY MASS | 0 PARTS BY MASS |
| PPS FIBER | S307 | 0 PARTS BY MASS | 0 PARTS BY MASS | 0 PARTS BY MASS | 0 PARTS BY MASS |
| GRAPHITE | 1707SJ | 1000 PARTS BY MASS | 977.8 PARTS BY MASS | 977.8 PARTS BY MASS | 977.8 PARTS BY MASS |
| | AT-No.5S | 0 PARTS BY MASS | 244.4 PARTS BY MASS | 244.4 PARTS BY MASS | 244.4 PARTS BY MASS |
| TOTAL | | 1100.0 PARTS BY MASS | 1388.9 PARTS BY MASS | 1388.9 PARTS BY MASS | 1388.9 PARTS BY MASS |
| VOLUME RESISTIVITY mΩcm < 2.5 | | 1.46 PASS | 2.00 PASS | 3.07 FAIL | 2.46 PASS |
| BENDING STRENGTH MPa > 40 | | 43.3 PASS | 37.9 FAIL | 44.9 PASS | 36.6 FAIL |
| BENDING STRAIN % > 0.7 | | 0.50 FAIL | 0.52 FAIL | 0.58 FAIL | 0.53 FAIL |
| OVERALL EVALUATION | | FAIL | FAIL | FAIL | FAIL |

[Table 4]

| | MODEL NUMBER | COMPARISON EXAMPLE 5 | COMPARISON EXAMPLE 6 | COMPARISON EXAMPLE 7 | COMPARISON EXAMPLE 8 |
|---|---|---|---|---|---|
| PPS | M2888 | 100 PARTS BY MASS | 100 PARTS BY MASS | 100 PARTS BY MASS | 100 PARTS BY MASS |
| ARAMID FIBER | T320NW 1-12 | 0 PARTS BY MASS | 0 PARTS BY MASS | 0 PARTS BY MASS | 0 PARTS BY MASS |
| | T32PNW 3-12 | 0 PARTS BY MASS | 0 PARTS BY MASS | 0 PARTS BY MASS | 0 PARTS BY MASS |
| | T320NW 6-12 | 0 PARTS BY MASS | 0 PARTS BY MASS | 0 PARTS BY MASS | 0 PARTS BY MASS |
| | 1080 | 0 PARTS BY MASS | 0 PARTS BY MASS | 0 PARTS BY MASS | 0 PARTS BY MASS |
| | 1094 | 0 PARTS BY MASS | 0 PARTS BY MASS | 0 PARTS BY MASS | 0 PARTS BY MASS |
| | 1097 | 0 PARTS BY MASS | 0 PARTS BY MASS | 0 PARTS BY MASS | 0 PARTS BY MASS |
| | D8016 | 66.7 PARTS BY MASS | 4.2 PARTS BY MASS | 4.2 PARTS BY MASS | 4.2 PARTS BY MASS |
| | C11-C | 0 PARTS BY MASS | 62.5 PARTS BY MASS | 0 PARTS BY MASS | 0 PARTS BY MASS |
| PAN-BASED CARBON FIBER | HTC110 | 0 PARTS BY MASS | 0 PARTS BY MASS | 62.5 PARTS BY MASS | 0 PARTS BY MASS |
| | HT C137 | 0 PARTS BY MASS | 0 PARTS BY MASS | 0 PARTS BY MASS | 62.5 PARTS BY MASS |
| PITCH-BASED CARBON FIBER | XN-100-03Z | 0 PARTS BY MASS | 0 PARTS BY MASS | 0 PARTS BY MASS | 0 PARTS BY MASS |
| PPS FIBER | S307 | 0 PARTS BY MASS | 0 PARTS BY MASS | 0 PARTS BY MASS | 0 PARTS BY MASS |
| GRAPHITE | 1707SJ | 977.8 PARTS BY MASS | 977.8 PARTS BY MASS | 977.8 PARTS BY MASS | 977.8 PARTS BY MASS |
| | AT-No.5S | 244.4 PARTS BY MASS | 244.4 PARTS BY MASS | 244.4 PARTS BY MASS | 244.4 PARTS BY MASS |
| TOTAL | | 1388.9 PARTS BY MASS | 1388.9 PARTS BY MASS | 1388.9 PARTS BY MASS | 1388.9 PARTS BY MASS |
| VOLUME RESISTIVITY mΩcm < 2.5 | | 7.53 FAIL | 1.86 PASS | 1.99 PASS | 1.65 PASS |
| BENDING STRENGTH MPa > 40 | | 38.6 FAIL | 36.4 FAIL | 38.7 FAIL | 33.5 FAIL |
| BENDING STRAIN % > 0.7 | | 0.54 FAIL | 0.73 PASS | 0.75 PASS | 0.62 FAIL |
| OVERALL EVALUATION | | FAIL | FAIL | FAIL | FAIL |

[Table 5]

| | MODEL NUMBER | COMPARISON EXAMPLE 9 |
|---|---|---|
| PPS | M2888 | 100 PARTS BY MASS |
| ARAMID FIBER | T320NW 1-12 | 0 PARTS BY MASS |
| | T32PNW 3-12 | 0 PARTS BY MASS |
| | T320NW 6-12 | 0 PARTS BY MASS |
| | 1080 | 0 PARTS BY MASS |
| | 1094 | 0 PARTS BY MASS |
| | 1097 | 0 PARTS BY MASS |
| | D8016 | 4.2 PARTS BY MASS |
| | C11-C | 0 PARTS BY MASS |
| PAN-BASED CARBON FIBER | HTC110 | 0 PARTS BY MASS |
| | HT C137 | 0 PARTS BY MASS |
| PITCH-BASED CARBON FIBER | XN-100-03Z | 0 PARTS BY MASS |
| PPS FIBER | S307 | 62.5 PARTS BY MASS |
| GRAPHITE | 1707SJ | 977.8 PARTS BY MASS |
| | AT-No.5S | 244.4 PARTS BY MASS |
| TOTAL | | 1388.9 PARTS BY MASS |
| VOLUME RESISTIVITY mΩcm < 2.5 | | 3.04 FAIL |
| BENDING STRENGTH MPa > 40 | | 48.7 PASS |
| BENDING STRAIN % > 0.7 | | 0.46 FAIL |
| OVERALL EVALUATION | | FAIL |

As for Comparison Examples 1 to 9, at least one of the items among the volume resistivity, the bending strength, and the bending strain was evaluated as a fail. In contrast, Examples 1 to 8 were evaluated as a pass for all the properties.

From the results presented above, by comparing Comparison Example 1 with Example 1, we were able to confirm that the bending strain was improved when the constituent materials of the plate contained para-aramid fiber containing a meta-phenylene group. Further, by comparing Example 1 with Comparison Examples 2 to 9, we were able to confirm the advantageous effects of containing a para-aramid fiber that contains a meta-phenylene group, and not the other types of fibers, as a constituent material of the plate.

Industrial Applicability

The separator according to the present invention is applicable to a fuel cell or fuel cells, primary batteries such as lithium batteries, secondary batteries such as redox flow batteries, and electricity storage devices such as capacitors.

## Claims

**1.** A separator for an electricity storage device, the separator comprising a plate containing graphite, resin, and aramid fiber different from the resin, wherein

the plate comprises, on a surface thereof, a groove serving as a flow path, and
the aramid fiber is para-aramid fiber containing a meta-phenylene group.

**2.** The separator of claim 1, further comprising: a barrier layer that has a better gas barrier property than that of the plate and is formed on at least a surface on a front side and a surface on a rear side of the plate including the groove and surfaces of the plate other than the groove.

**3.** The separator of claim 2, wherein
the barrier layer is a film-like covering layer different from the plate.

**4.** The separator of claim 2, wherein
the barrier layer is a filling layer in which resin or rubber fills spaces between particles or fibers structuring the plate.

**5.** The separator of claim 4, wherein
the barrier layer comprises the filling layer and a film-like covering layer different from the plate.

**6.** The separator of any one of claims 2 to 5, wherein
the barrier layer contains at least one of polyether ether ketone and polyphenylene sulfide.

**7.** The separator of any one of claims 2 to 6, wherein
the resin structuring the plate and resin structuring the barrier layer are thermoplastic resin of a mutually same type.

**8.** The separator of any one of claims 2 to 7, wherein
at least one of the resin structuring the plate and resin structuring the barrier layer contains polyphenylene sulfide as a principal material thereof.

**9.** A method for producing the separator of any one of claims 1 to 8, the method comprising:

a shaping material arranging step of arranging, in a mold, a shaping material being one selected from among a mixture obtained by mixing together at least the graphite, the resin, and the aramid fiber, a grooved plate that is the plate comprising, on a surface thereof, a pre-groove part that is shallower than the groove that serves as a flow path, and a precursor plate that is the grooved plate in a state without the pre-groove part; and
a shaping step of performing a shaping process by closing the mold while the shaping material is in a state of being arranged therein.

**10.** The method for producing the separator of claim 9, wherein

the shaping material either is the mixture obtained by mixing together at least the graphite, the resin, and the aramid fiber or is the precursor plate,
the mold comprises, on inside thereof, an uneven surface for transferring the groove, and
in the shaping step, either the mixture or the precursor plate is shaped and the groove is formed, by using the mold comprising the uneven surface.

**11.** The method for producing the separator of claim 9, wherein

the shaping material is the grooved plate,
the mold comprises, on inside thereof, an uneven surface that is insertable into the pre-groove part and is for transferring the groove, and
in the shaping step, the groove is formed by deepening the pre-groove part on the grooved plate, while using the mold comprising the uneven surface.

**12.** The method for producing the separator of any one of claims 9 to 11, the method further comprising:

a first film arranging step, prior to the shaping material arranging step, of arranging, in the mold, a first film for forming, on at least the surface on the rear side of the plate, a barrier layer having a better gas barrier property than that of the plate; and
a second film arranging step of arranging a second film for forming the barrier layer, over the shaping material arranged in the mold in the shaping material arranging step, wherein
in the shaping material arranging step, the shaping material is arranged on the first film, and
in the shaping step, the shaping process is performed by closing the mold while the shaping material is sandwiched between the first film and the second film, to form the barrier layer on both of the surfaces of the plate

on the front side and on the rear side.

**13.** The method for producing the separator of any one of claims 9 to 12, wherein the resin in the mixture is resin powder in a flake form.

[Figure 1]

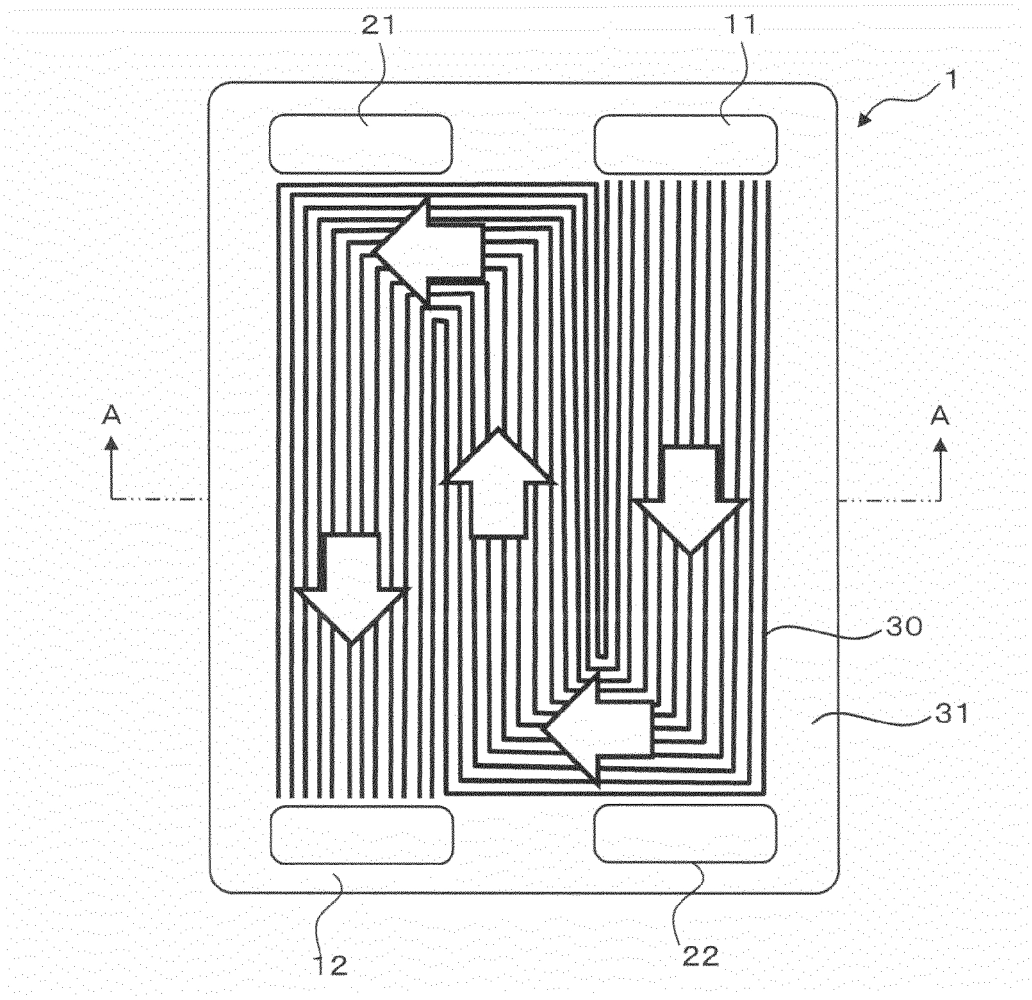

[Figure 2A]

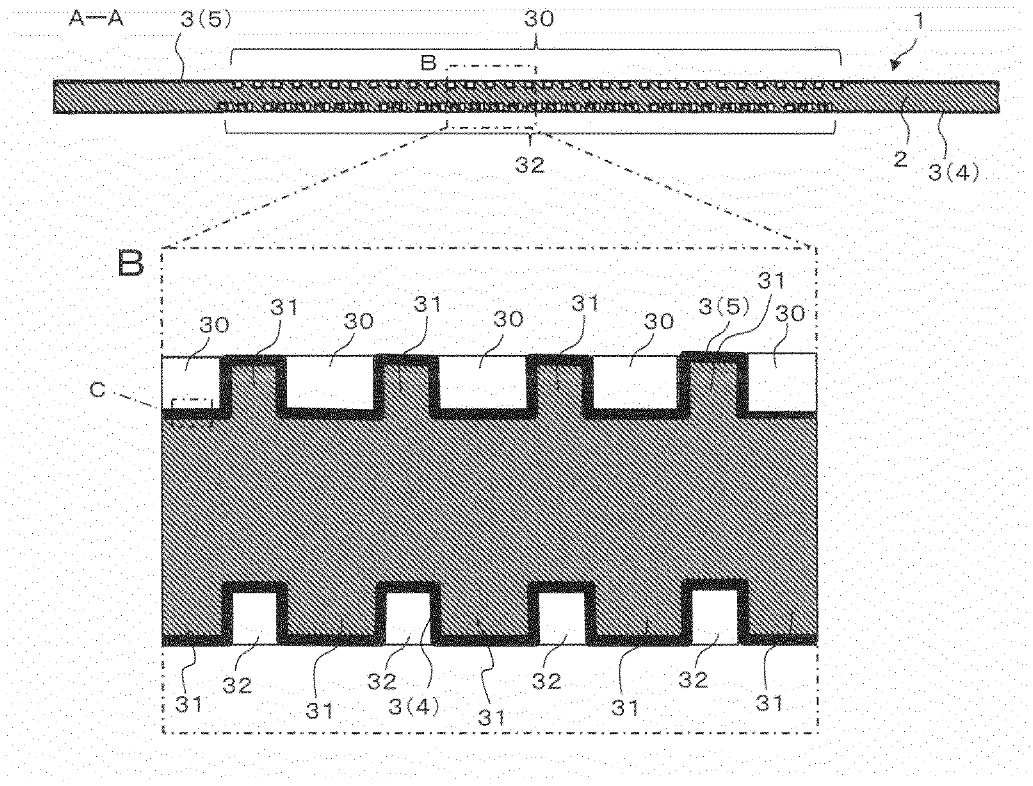
A—A
3(5)
30
1
B
2
3(4)
32
B
C
30
31
30
31
30
31
30
3(5)
31
30
31
32
31
32
3(4)
31
32
31
32
31

[Figure 2B]

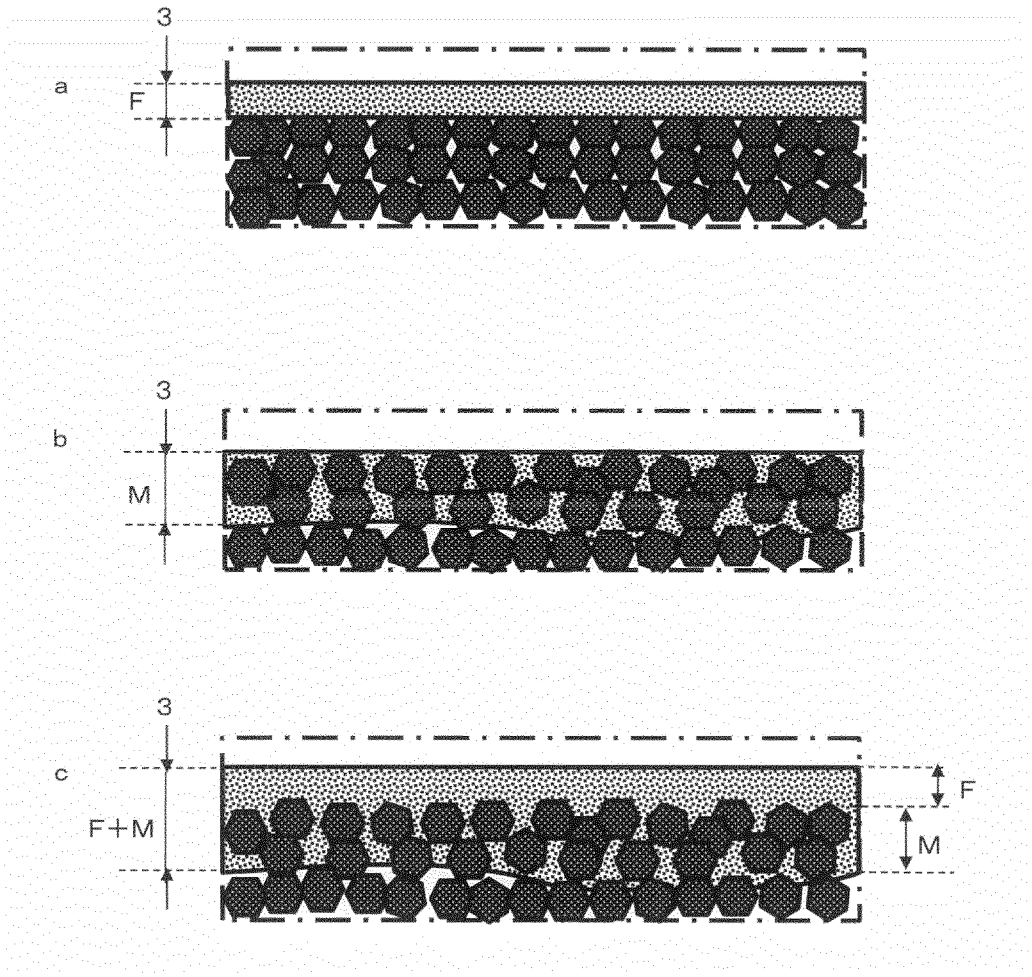

[Figure 3]

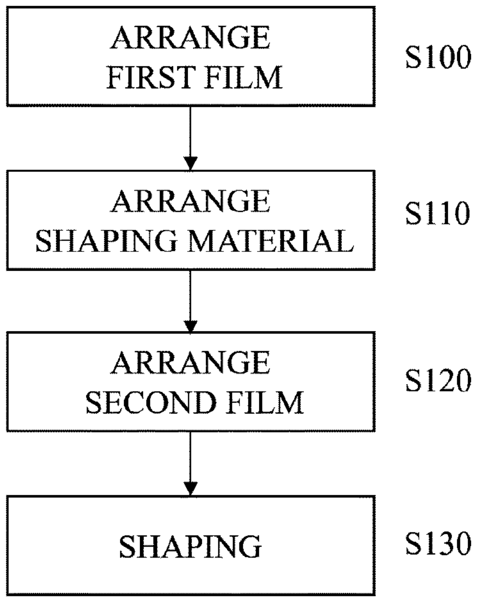


[Figure 4]

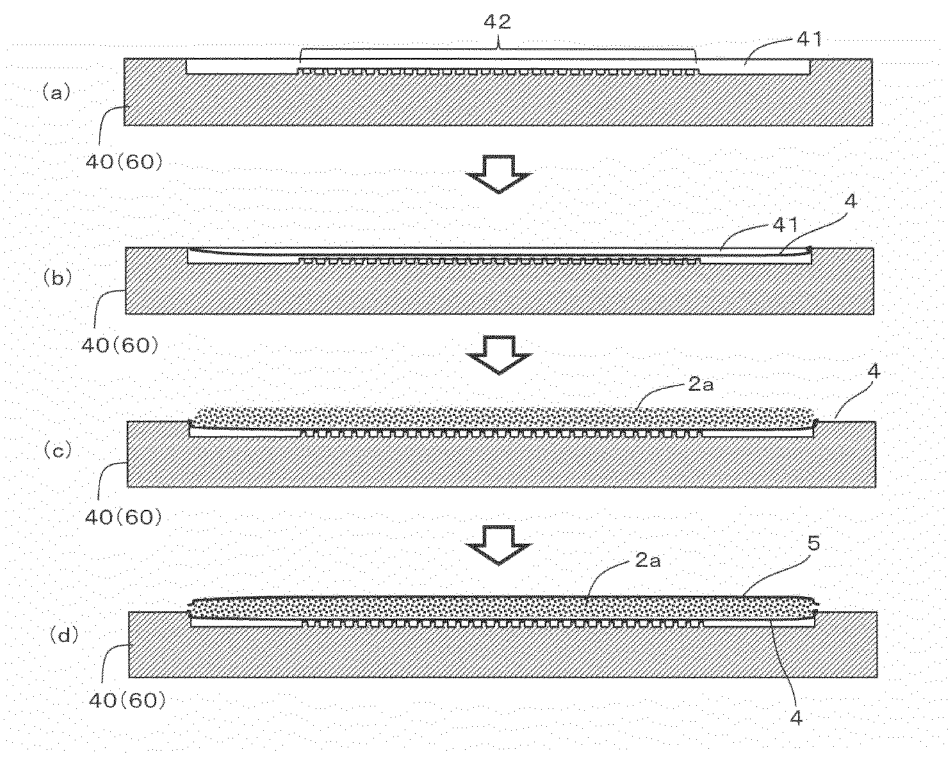

[Figure 5]

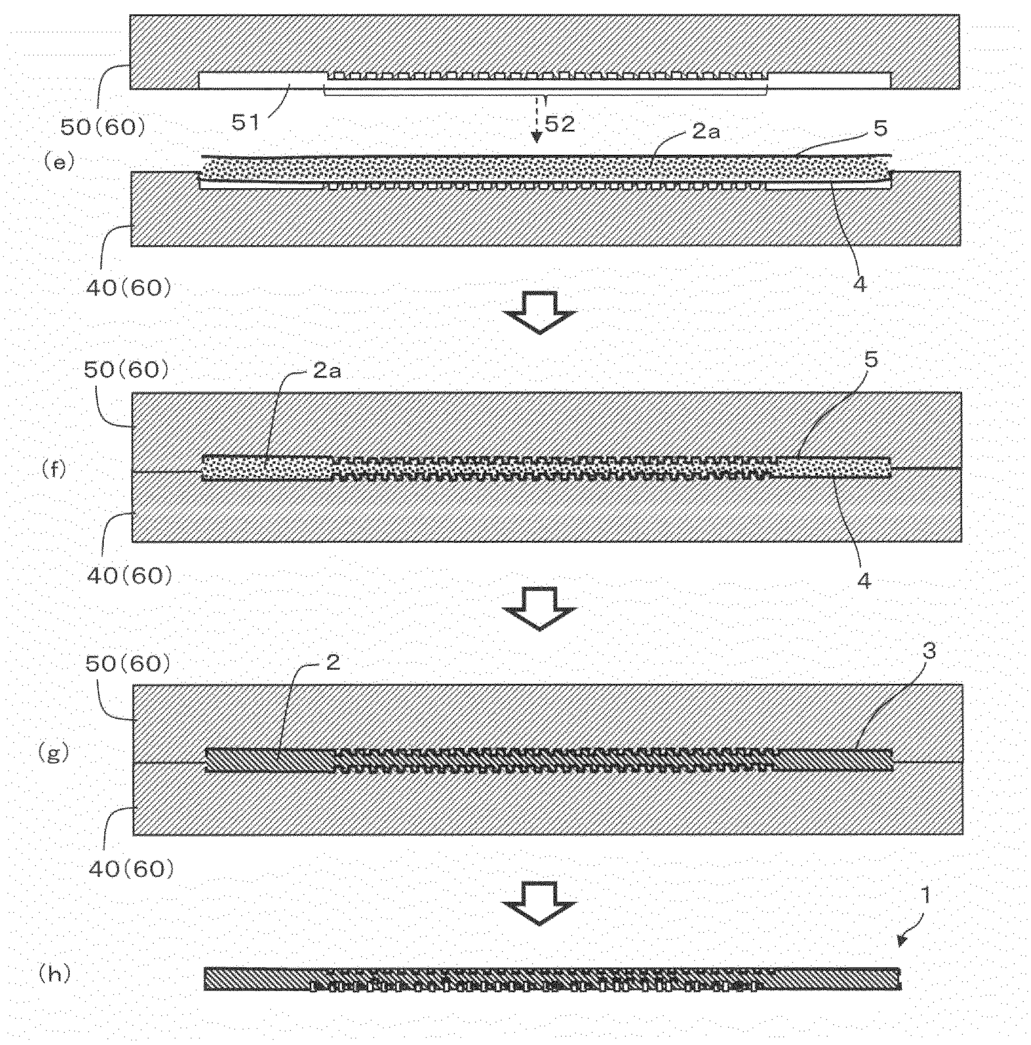

[Figure 6]

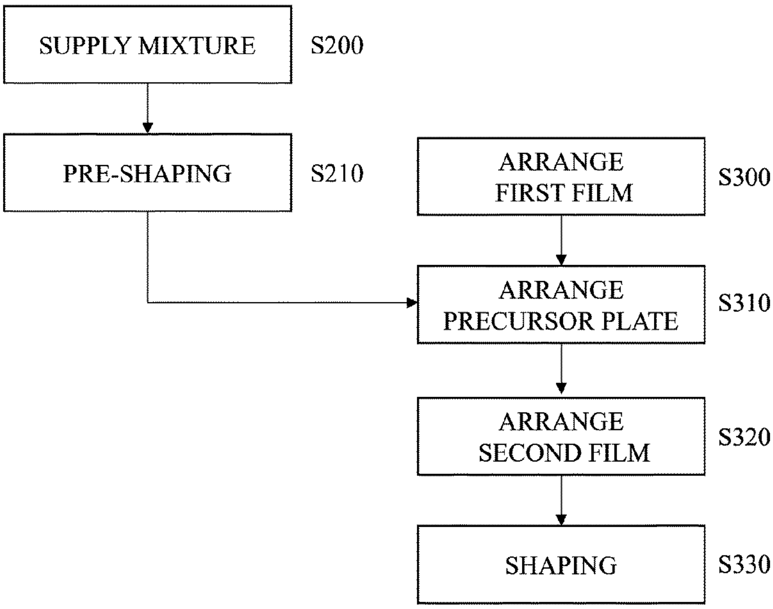
SUPPLY MIXTURE
S200
PRE-SHAPING
S210
ARRANGE FIRST FILM
S300
ARRANGE PRECURSOR PLATE
S310
ARRANGE SECOND FILM
S320
SHAPING
S330

[Figure 7]

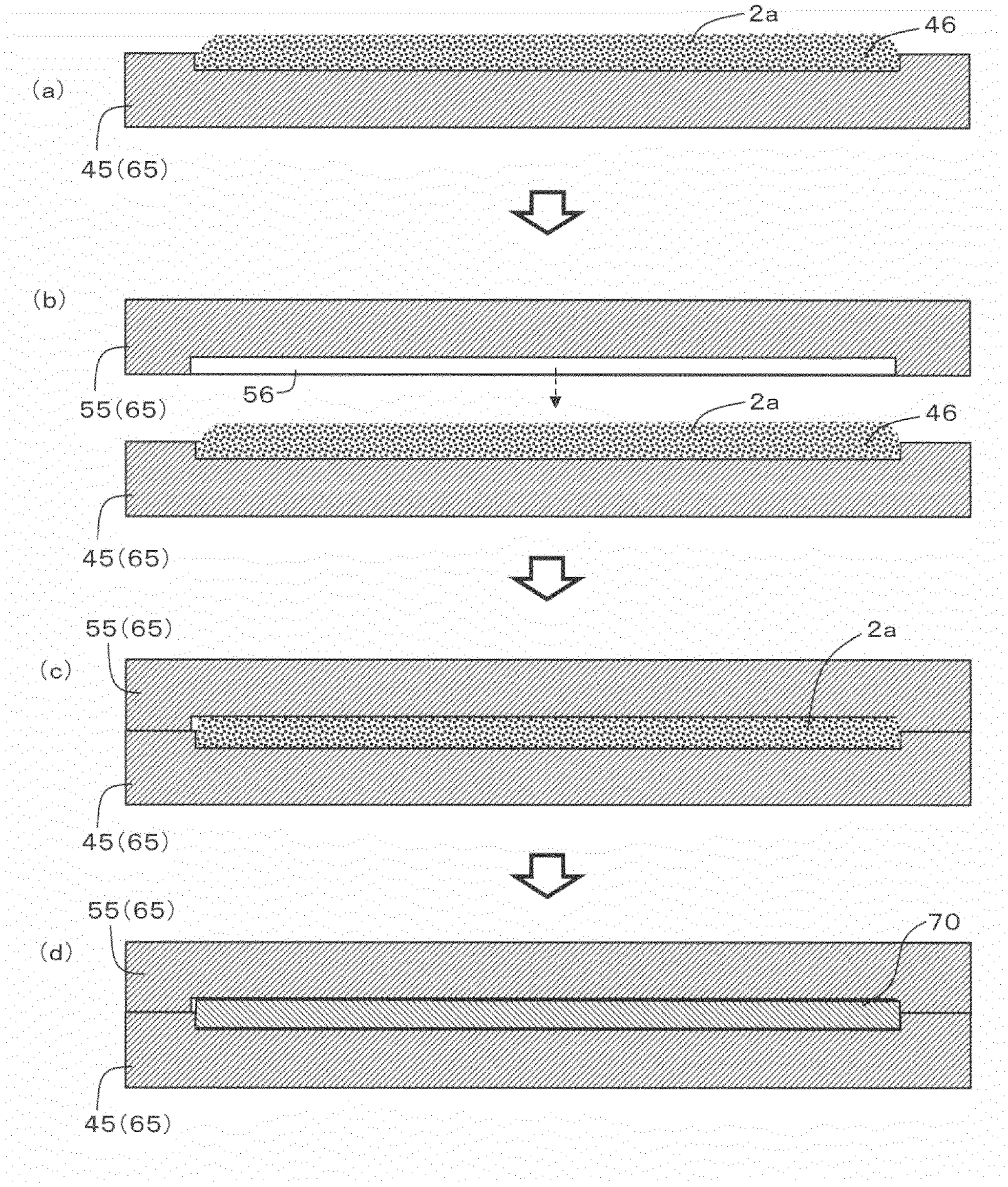

[Figure 8]

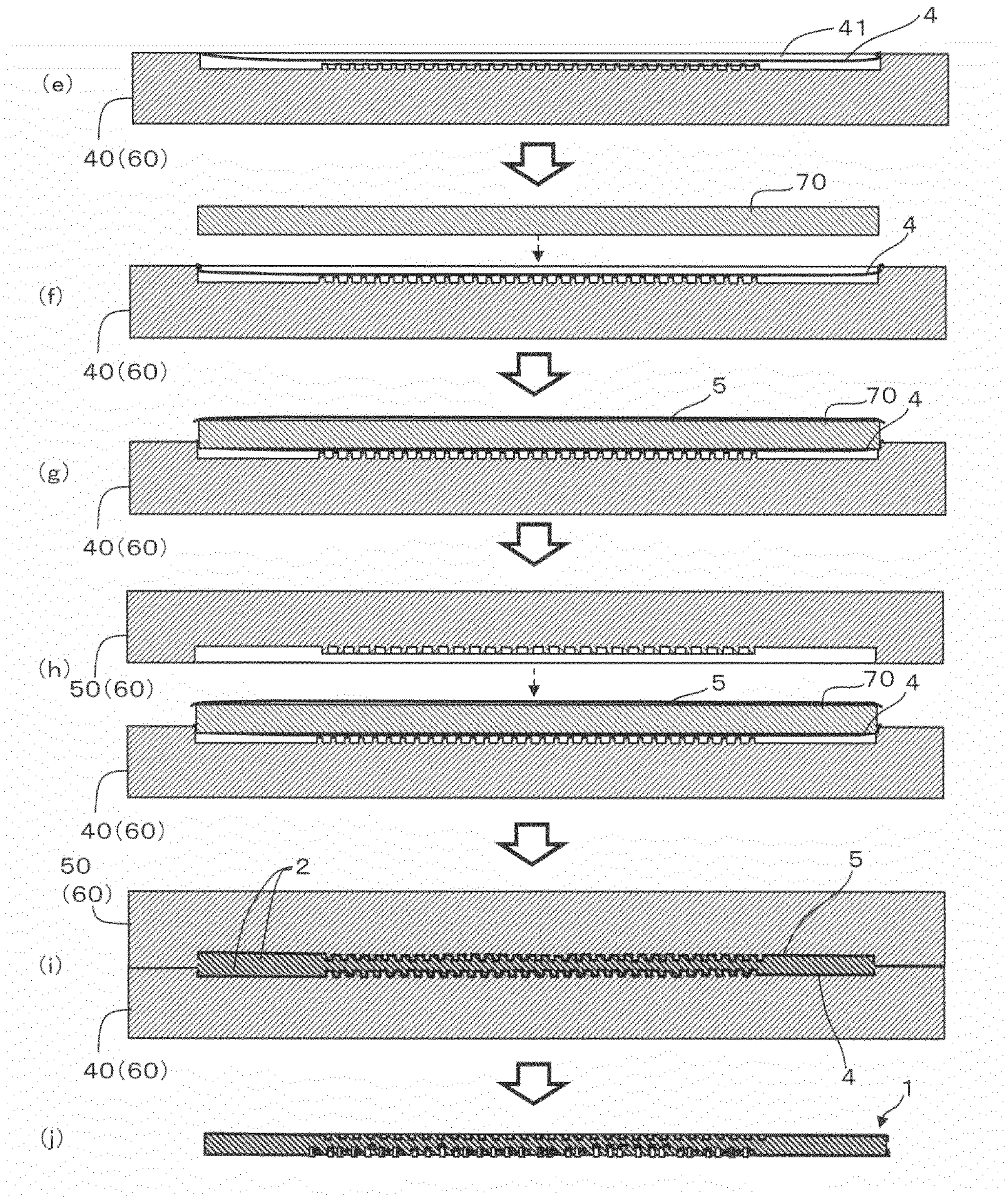
41
4
(e)
40(60)
70
4
(f)
40(60)
5
70
4
(g)
40(60)
(h)
50(60)
5
70
4
40(60)
50
(60)
2
5
(i)
40(60)
4
1
(j)

[Figure 9]

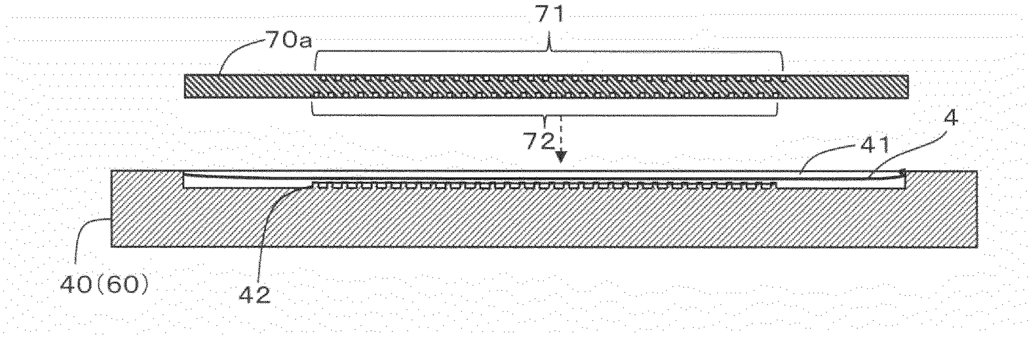


[Figure 10]

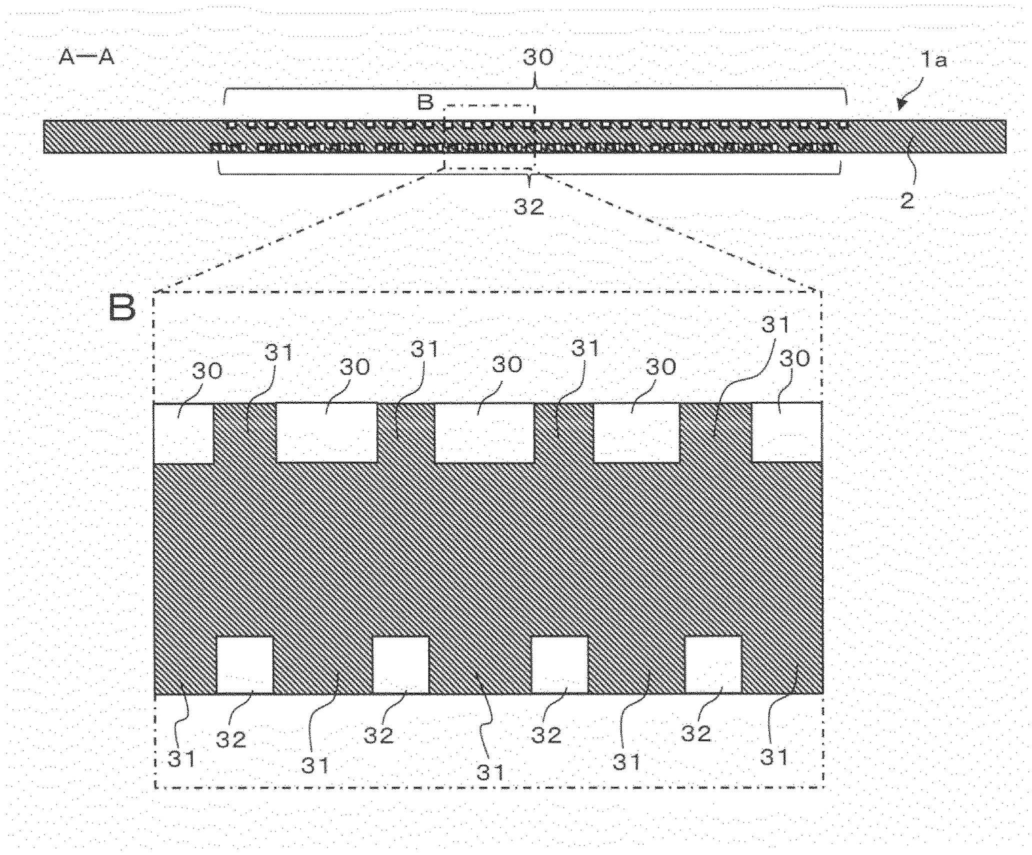

[Figure 11]

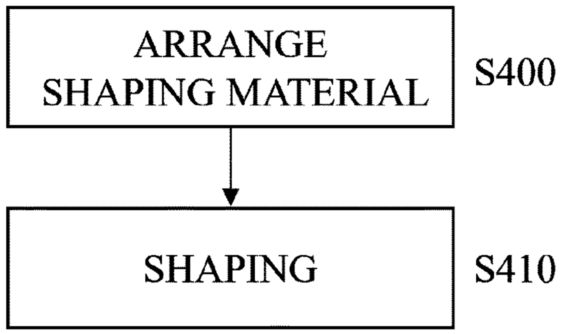


[Figure 12]

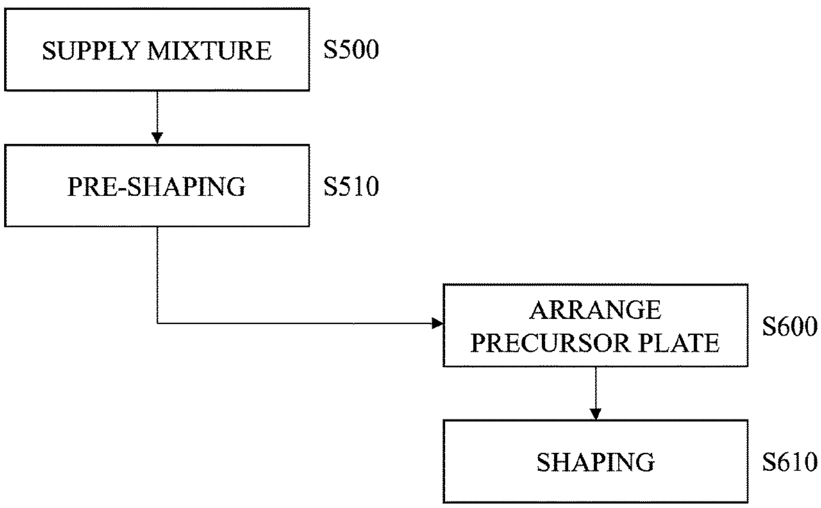

## INTERNATIONAL SEARCH REPORT

International application No. PCT/JP2021/027107

A. CLASSIFICATION OF SUBJECT MATTER

H01M 8/0221(2016.01)i; H01M 8/0228(2016.01)i; H01M 50/403(2021.01)i; H01M 50/414(2021.01)i; H01M 50/423(2021.01)i; H01M 50/449(2021.01)i
FI: H01M8/0221; H01M8/0228; H01M50/403 D; H01M50/423; H01M50/414; H01M50/449

According to International Patent Classification (IPC) or to both national classification and IPC

B. FIELDS SEARCHED

Minimum documentation searched (classification system followed by classification symbols)
H01M8/0221; H01M8/0228; H01M50/403; H01M50/414; H01M50/423; H01M50/449

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2018/131566 A1 (SHINETSU POLYMER CO) 19 July 2018 (2018-07-19) claims, paragraphs [0023], [0025], [0031]-[0041] | 1, 9-10, 13 |
| Y | WO 2018/003979 A1 (UBE INDUSTRIES) 04 January 2018 (2018-01-04) paragraph [0058] | 1, 9-10, 13 |
| A | JP 2001-15131 A (DAINIPPON INK & CHEM INC) 19 January 2001 (2001-01-19) entire text, all drawings | 1-13 |
| A | JP 2006-269305 A (JAPAN VILENE CO LTD) 05 October 2006 (2006-10-05) entire text, all drawings | 1-13 |

☒ Further documents are listed in the continuation of Box C. ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 24 August 2021 (24.08.2021) | 07 September 2021 (07.09.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2021/027107

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-21289 A (DU PONT TEIJIN ADVANCED PAPER KK) 03 February 2011 (2011-02-03) entire text, all drawings | 1-13 |
| A | JP 2000-77079 A (NIPPON PILLAR PACKING CO LTD) 14 March 2000 (2000-03-14) entire text, all drawings | 1-13 |

Form PCT/ISA/210 (continuation of second sheet) (January 2015)

**INTERNATIONAL SEARCH REPORT**
Information on patent family members

International application No.
PCT/JP2021/027107

| Patent Documents referred in the Report | Publication Date | Patent Family | Publication Date |
|---|---|---|---|
| WO 2018/131566 A1 | 19 Jul. 2018 | US 2019/0341630 A1 claims, paragraphs [0024], [0026], [0032]-[0051] EP 3550650 A | |
| WO 2018/003979 A1 | 04 Jan. 2018 | (Family: none) | |
| JP 2001-15131 A | 19 Jan. 2001 | (Family: none) | |
| JP 2006-269305 A | 05 Oct. 2006 | (Family: none) | |
| JP 2011-21289 A | 03 Feb. 2011 | (Family: none) | |
| JP 2000-77079 A | 14 Mar. 2000 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011090937 A
- JP 2006294407 A